(19) Europäisches Patentamt
European Patent Office
Office européen des brevets

(11) **EP 4 529 323 A1**

(12) **EUROPEAN PATENT APPLICATION**
published in accordance with Art. 153(4) EPC

(43) Date of publication:
**26.03.2025 Bulletin 2025/13**

(51) International Patent Classification (IPC):
**H04W 72/0446** (2023.01)    **G01S 13/00** (2006.01)

(21) Application number: **23818878.3**

(52) Cooperative Patent Classification (CPC):
**G01S 13/00; H04W 72/0446**

(22) Date of filing: **10.05.2023**

(86) International application number:
**PCT/CN2023/093333**

(87) International publication number:
**WO 2023/236713 (14.12.2023 Gazette 2023/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.06.2022 CN 202210661689**

(71) Applicant: **Huawei Technologies Co., Ltd.
Shenzhen, Guangdong 518129 (CN)**

(72) Inventors:
• **WANG, Zhonglong
  Shenzhen, Guangdong 518129 (CN)**

• **XIE, Xinqian
  Shenzhen, Guangdong 518129 (CN)**
• **SHAO, Jiafeng
  Shenzhen, Guangdong 518129 (CN)**
• **YE, Wei
  Shenzhen, Guangdong 518129 (CN)**
• **LI, Hantao
  Shenzhen, Guangdong 518129 (CN)**

(74) Representative: **Epping - Hermann - Fischer
Patentanwaltsgesellschaft mbH
Schloßschmidstraße 5
80639 München (DE)**

(54) **COMMUNICATION METHOD AND APPARATUS**

(57) A communication method and apparatus are provided. The method includes: A first network device determines a first time domain resource, and sends a first signal on the first time domain resource. The first time domain resource includes $N_1$ first time domain symbols and $N_2$ second time domain symbols. A difference between any two adjacent first time domain symbols in the $N_1$ first time domain symbols is $T_1$ time domain symbols. A difference between any two adjacent second time domain symbols in the $N_2$ second time domain symbols is $T_2$ time domain symbols. $T_2 > T_1$, and $N_1$ and $N_2$ are positive integers. According to the solutions, the first network device sends the first signal on the $N_1$ first time domain symbols with a periodicity of $T_1$ and the $N_2$ second time domain symbols with a periodicity of $T_2$. Because $T_2 > T_1$, compared with a case in which a signal is always sent with the periodicity of $T_1$ in same duration, the solutions of this application can reduce time domain resource overheads of sending the first signal.

S601 — A first network device determines a first time domain resource, including $N_1$ first time domain symbols and $N_2$ second time domain symbols, where a difference between any two adjacent first time domain symbols is $T_1$ time domain symbols, and a difference between any two adjacent second time domain symbols is $T_2$ time domain symbols

S602 — The first network device sends a first signal on the first time domain resource

FIG. 6

## Description

This application claims priority to Chinese Patent Application No. 202210661689.7, filed with the China National Intellectual Property Administration on June 10, 2022 and entitled "COMMUNICATION METHOD AND APPARATUS", which is incorporated herein by reference in its entirety.

## TECHNICAL FIELD

Embodiments of this application relate to the communication field, and in particular, to an integrated sensing and communication method and apparatus.

## BACKGROUND

Integrated sensing and communication is a key technology in a next generation wireless communication network, aims to integrate two functions of wireless communication and sensing into a same system, and implements target positioning, detection, imaging, identification, and the like by using various propagation features of a wireless signal, to obtain surrounding physical environment information, explore a communication capability, and enhance user experience.

Currently, in an integrated sensing and communication system, a periodic sensing signal pattern usually indicates a time domain location of a sensing signal. However, when a signal is sent based on a current sensing signal pattern, resource overheads occupied by the sensing signal are high.

## SUMMARY

This application provides a communication method and apparatus, to reduce time domain resource overheads of sending a signal.

According to a first aspect, a communication method is provided. The method may be performed by a first network device, or may be performed by a component of the first network device, for example, a processor, a chip, or a chip system of the first network device, or may be implemented by a logical module or software that can implement all or a part of functions of the first network device. The method includes: determining a first time domain resource; and sending a first signal on the first time domain resource. The first time domain resource includes $N_1$ first time domain symbols and $N_2$ second time domain symbols. A difference between any two adjacent first time domain symbols in the $N_1$ first time domain symbols is $T_1$ time domain symbols. A difference between any two adjacent second time domain symbols in the $N_2$ second time domain symbols is $T_2$ time domain symbols. $T_2 > T_1$, and $N_1$ and $N_2$ are positive integers.

According to this solution, the first network device sends the first signal on the $N_1$ first time domain symbols with a periodicity of $T_1$ and the $N_2$ second time

domain symbols with a periodicity of $T_2$. Because $T_2 > T_1$, compared with a case in which a signal is always sent with the periodicity of $T_1$ in same duration, the solution of this application can reduce overheads. When the first signal is a sensing signal, the solution of this application can reduce resource overheads occupied by the sensing signal. In addition, in this solution, requirements of communication performance and sensing performance for time domain resources are considered. In a possible design, the first signal is used for sensing. In other words, the first signal is the sensing signal. Based on the possible design, the resource overheads occupied by the sensing signal can be reduced.

In a possible design, $T_2$, $N_1$, and $T_1$ satisfy the following formula:

$$T_2 = \left( N_1 + 1 \right) \times T_1 .$$

In a possible design, a 1st second time domain symbol in the $N_2$ second time domain symbols is a $T_1^{th}$ time domain symbol after a last first time domain symbol in the $N_1$ first time domain symbols.

Based on the foregoing two possible designs, when sensing a sensing target based on an echo signal of the received first signal, a receiving device may virtualize echo signals with a periodicity of $T_1$ that are distributed at equal intervals, so that the receiving device obtains echo signals whose quantity is similar to and periodicity is the same as that in a solution in which the sensing signal is always sent with the periodicity of $T_1$ in a first time period. Therefore, compared with the solution in which the sensing signal is always sent with the periodicity of $T_1$ in the first time period, a sensing speed measurement range in the solution of this application remains unchanged. Therefore, based on the solution of this application, the resource overheads of the sensing signal can be reduced when the sensing speed measurement range remains unchanged.

In a possible design, the first time domain resource is in the first time period, and a 1st first time domain symbol in the $N_1$ first time domain symbols is a time domain symbol numbered $N_S$ in the first time period.

In a possible design, the first time domain resource is in the first time period, and $N_2$ satisfies the following formula:

$$N_2 \le \left\lfloor \left( N - 1 - N_s - N_1 \times T_1 \right) / T_2 \right\rfloor + 1 ,$$

where N is a total quantity of time domain symbols occupied by the first time period, $N_s$ is a number of the 1st first time domain symbol in the $N_1$ first time domain symbols in the first time period, and $\lfloor \ \rfloor$ represents rounding down.

Based on the possible design, it can be ensured that $N_2$ time domain symbols are in the first time period, or it can be ensured that the first time domain resource is in the first time period, or it can be ensured that a length of the first time domain resource does not exceed the first time period. In a possible design, $N_1$ is 4, and $T_1$ is 7; $N_1$ is 6, and $T_1$ is 5; or $N_1$ is 34, and $T_1$ is 1.

Based on the possible design, when $N_1 = 4, T_1 = 7$, the resource overheads of the sensing signal are minimum, and overheads can be reduced to a maximum extent. When $N_1 = 6, T_1 = 5$, $T_1$ is small, in other words, density of the $N_1$ first time domain symbols is high. Therefore, a sensing speed measurement range is large. When $N_1 = 34, T_1 = 1$, a large quantity of sensing signals may be sent, to increase energy of echo signals that is accumulated in the first time period, and enlarge sensing coverage.

In a possible design, the first time domain resource is in the first time period, and a slot configuration in the first time period is DDDSU. $7 \leq N_S \leq 23$, $5 \leq N_S \leq 21$, or $1 \leq N_S \leq 17$. D represents a downlink slot, S represents a slot including an uplink time domain symbol and a downlink time domain symbol, U represents an uplink slot, $N_s$ is the number of the 1st first time domain symbol in the $N_1$ first time domain symbols in the first time period, and $N_s$ is a positive integer.

In a possible design, the first time domain resource is in the first time period, and a slot configuration in the first time period is DDDSUDDSUU or DDSUU. $7 \leq N_S \leq 9$, $5 \leq N_S \leq 7$, or $1 \leq N_S \leq 3$. D represents a downlink slot, S represents a slot including an uplink time domain symbol and a downlink time domain symbol, U represents an uplink slot, $N_s$ is the number of the 1st first time domain symbol in the $N_1$ first time domain symbols in the first time period, and $N_s$ is a positive integer.

In a possible design, the first time domain resource is in the first time period; and the first time period occupies 40 slots, $N_2$ is 15, and $T_2$ is 35; or the first time period occupies 80 slots, $N_2$ is 31, and $T_2$ is 35.

In a possible design, a location of a 1st first time domain symbol in the $N_1$ first time domain symbols is the same as a location of a 1st second time domain symbol in the $N_2$ second time domain symbols.

In a possible design, $T_1$ and $T_2$ satisfy the following formulas:

$$T_1 = M \times a_1, T_2 = M \times a_2,$$

where $a_1 < a_2$, $a_1$ and $a_2$ are relatively prime, and $M$ is a positive integer.

In a possible design, the first time domain resource is in a first time period, and the first time period occupies 80 slots. $N_1$ is 15, $T_1$ is 36, $N_2$ is 8, $T_2$ is 135, and $35 \leq N_S \leq 37$; or $N_1$ is 13, $T_1$ is 36, $N_2$ is 8, $T_2$ is 117, and $0 \leq N_S \leq 2$. $N_s$ is a number of a 1st first time domain symbol in the $N_1$ first time domain symbols in the first time period, and $N_s$ is a positive integer.

In a possible design, the method further includes: receiving a second signal on the first time domain resource, where the second signal is an echo signal of the first signal.

In a possible design, the method further includes: sending indication information, where the indication information indicates a location of the first time domain resource.

In a possible design, the method further includes: determining a second time domain resource, where the second time domain resource includes $N_1$ third time domain symbols and $N_2$ fourth time domain symbols, a difference between any two adjacent third time domain symbols in the $N_1$ third time domain symbols is $T_1$ time domain symbols, and a difference between any two adjacent fourth time domain symbols in the $N_2$ fourth time domain symbols is $T_2$ time domain symbols; and the sending a first signal on the first time domain resource includes: sending the first signal on the first time domain resource and the second time domain resource.

In a possible design, a difference between a 1st time domain symbol in the first time domain resource and a 1st time domain symbol in the second time domain resource is $T_3$ time domain symbols, where $T_3$ is a positive integer.

Based on the foregoing two possible designs, the first network device may send the first signal on a plurality of groups of time domain resources, to ensure coverage of the sensing signal or energy of echo signals that is accumulated in the first time period while reducing resource overheads of the first signal, so as to improve sensing precision.

According to a second aspect, a communication method is provided. The method may be performed by a receiving device, or may be performed by a component of the receiving device, for example, a processor, a chip, or a chip system of the receiving device, or may be implemented by a logical module or software that can implement all or a part of functions of the receiving device. The receiving device may be a second network device or a terminal device. The method includes: determining a first time domain resource, and receiving a first signal on the first time domain resource. The first time domain resource includes $N_1$ first time domain symbols and $N_2$ second time domain symbols. A difference between any two adjacent first time domain symbols in the $N_1$ first time domain symbols is $T_1$ time domain symbols. A difference between any two adjacent second time domain symbols in the $N_2$ second time domain symbols is $T_2$ time domain symbols. $T_2 > T_1$, and $N_1$ and $N_2$ are positive integers.

According to this solution, the receiving device receives the first signal on the $N_1$ first time domain symbols with a periodicity of $T_1$ and the $N_2$ second time domain symbols with a periodicity of $T_2$. Because $T_2 > T_1$, compared with a case in which a signal is always received with the periodicity of $T_1$ in same duration, the solution of this application can reduce overheads. When the first signal is a sensing signal, the solution of this application can reduce resource overheads occupied by the sensing signal.

In a possible design, $T_2$, $N_1$, and $T_1$ satisfy the

following formula:

$$T_2 = (N_1 + 1) \times T_1.$$

In a possible design, a 1st second time domain symbol in the $N_2$ second time domain symbols is a $T_1^{th}$ time domain symbol after a last first time domain symbol in the $N_1$ first time domain symbols.

In a possible design, the first time domain resource is in a first time period, and $N_2$ satisfies the following formula:

$$N_2 \leq \lfloor (N - 1 - N_s - N_1 \times T_1) / T_2 \rfloor + 1,$$

where $N$ is a total quantity of time domain symbols occupied by the first time period, $N_s$ is a number of the 1st first time domain symbol in the $N_1$ first time domain symbols in the first time period, and $\lfloor \rfloor$ represents rounding down.

In a possible design, a location of a 1st first time domain symbol in the $N_1$ first time domain symbols is the same as a location of a 1st second time domain symbol in the $N_2$ second time domain symbols.

In a possible design, $T_1$ and $T_2$ satisfy the following formulas:

$$T_1 = M \times a_1, T_2 = M \times a_2,$$

where $a_1 < a_2$, $a_1$ and $a_2$ are relatively prime, and $M$ is a positive integer.

In a possible design, the determining a first time domain resource includes: receiving indication information from a first network device, and determining the first time domain resource based on the indication information. The indication information indicates a location of the first time domain resource.

For technical effects achieved by any one of the possible designs of the second aspect, refer to technical effects achieved by the corresponding device in the first aspect. Details are not described herein again.

According to a third aspect, a communication apparatus is provided. The communication apparatus is configured to implement various methods. The communication apparatus may be the first network device in the first aspect, or an apparatus included in the first network device, for example, a chip or a chip system; or the communication apparatus may be the receiving device in the second aspect, or an apparatus included in the receiving device, for example, a chip or a chip system. The communication apparatus includes corresponding modules, units, or means (means) for implementing the methods. The modules, the units, or the means may be implemented by hardware, software, or hardware executing corresponding software. The hardware or the software includes one or more modules or units corresponding to a function.

In some possible designs, the communication apparatus may include a processing module and a transceiver module. The processing module may be configured to implement a processing function in any one of the foregoing aspects and any one of the possible implementations of the foregoing aspects. The transceiver module may include a receiving module and a sending module that are respectively configured to implement a receiving function and a sending function in any one of the foregoing aspects and any one of the possible implementations of the foregoing aspects.

In some possible designs, the transceiver module may include a transceiver circuit, a transceiver machine, a transceiver, or a communication interface.

According to a fourth aspect, a communication apparatus is provided. The communication apparatus includes a processor and a memory. The memory is configured to store computer instructions, and when the processor executes the instructions, the communication apparatus is enabled to perform the method in any one of the aspects. The communication apparatus may be the first network device in the first aspect, or an apparatus included in the first network device, for example, a chip or a chip system; or the communication apparatus may be the receiving device in the second aspect, or an apparatus included in the receiving device, for example, a chip or a chip system.

According to a fifth aspect, a communication apparatus is provided. The communication apparatus includes a processor and a communication interface. The communication interface is configured to communicate with a module outside the communication apparatus, and the processor is configured to execute a computer program or instructions, to enable the communication apparatus to perform the method in any one of the aspects. The communication apparatus may be the first network device in the first aspect, or an apparatus included in the first network device, for example, a chip or a chip system; or the communication apparatus may be the receiving device in the second aspect, or an apparatus included in the receiving device, for example, a chip or a chip system.

According to a sixth aspect, a communication apparatus is provided. The communication apparatus includes at least one processor. The processor is configured to execute a computer program or instructions stored in a memory, to enable the communication apparatus to perform the method in any one of the aspects. The memory may be coupled to the processor, or may be independent of the processor. The communication apparatus may be the first network device in the first aspect, or an apparatus included in the first network device, for example, a chip or a chip system; or the communication apparatus may be the receiving device in the second aspect, or an apparatus included in the receiving device, for example, a chip or a chip system.

According to a seventh aspect, a computer-readable storage medium is provided. The computer-readable storage medium stores a computer program or instructions, and when the computer program or the instructions are executed on a communication apparatus, the communication apparatus is enabled to perform the method in any one of the aspects.

According to an eighth aspect, a computer program product including instructions is provided. When the computer program product runs on a communication apparatus, the communication apparatus is enabled to perform the method in any one of the aspects.

According to a ninth aspect, a communication apparatus is provided (where for example, the communication apparatus may be a chip or a chip system). The communication apparatus includes a processor, configured to implement the function in any one of the aspects.

In some possible designs, the communication apparatus includes a memory, and the memory is configured to store necessary program instructions and data.

In some possible designs, when the apparatus is the chip system, the apparatus may include a chip, or may include a chip and another discrete component.

It may be understood that when the communication apparatus provided in any one of the third aspect to the ninth aspect is the chip, a sending action/function of the communication apparatus may be understood as output information, and a receiving action/function of the communication apparatus may be understood as input information.

For a technical effect achieved by any one of the design manners of the third aspect to the ninth aspect, refer to technical effects achieved by different design manners in the first aspect or the second aspect. Details are not described herein again.

## BRIEF DESCRIPTION OF DRAWINGS

FIG. 1 is a diagram of a structure of a communication system according to this application;
FIG. 2 is a diagram of a structure of another communication system according to this application;
FIG. 3 is a diagram of a structure of still another communication system according to this application;
FIG. 4 is a diagram of a structure of still another communication system according to this application;
FIG. 5 is a diagram of a sensing signal sending pattern according to this application;
FIG. 6 is a schematic flowchart of a communication method according to this application;
FIG. 7 is a diagram 1 of a structure of a first time domain resource according to this application;
FIG. 8 is a schematic flowchart of another communication method according to this application;
FIG. 9 is a schematic flowchart of still another communication method according to this application;
FIG. 10 is a diagram 2 of a structure of a first time domain resource according to this application;

FIG. 11 is a diagram 3 of a structure of a first time domain resource according to this application;
FIG. 12 is a diagram 4 of a structure of a first time domain resource according to this application;
FIG. 13 is a diagram 5 of a structure of a first time domain resource according to this application;
FIG. 14 is a diagram of a structure of a first time domain resource and a second time domain resource according to this application;
FIG. 15 is a diagram of a structure of a communication apparatus according to this application;
FIG. 16 is a diagram of a structure of another communication apparatus according to this application;
FIG. 17 is a diagram of a structure of a network device according to this application;
FIG. 18 is a diagram of a structure of another network device according to this application; and
FIG. 19 is a diagram of a structure of still another communication apparatus according to this application.

## DESCRIPTION OF EMBODIMENTS

In the descriptions of this application, unless otherwise specified, the character "/" indicates that associated objects are in an "or" relationship. For example, A/B may represent A or B. The term "and/or" in this application merely describes an association relationship between associated objects and indicates that three relationships may exist. For example, A and/or B may represent three cases: Only A exists, both A and B exist, or only B exists, where A and B may be singular or plural.

In addition, in the descriptions of this application, "a plurality of" means two or more than two unless otherwise specified. At least one of the following items (pieces) or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

It may be understood that "embodiment" used throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments by using any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

It may be understood that, in this application, "when" and "if" mean that corresponding processing is performed in an objective situation, are not intended to limit time, do not require a determining action during implementation, and do not mean any other limitation.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features based on a requirement. Correspondingly, the apparatus provided in embodiments of this application may also correspondingly implement these features or functions. Details are not described.

In this application, unless otherwise specified, for same or similar parts in embodiments, reference may be made to each other. In embodiments of this application, unless otherwise specified or a logical conflict occurs, terms and/or descriptions in different embodiments are consistent and may be referenced by each other, and different embodiments may be combined based on internal logical relationships between embodiments to form a new embodiment. The following implementations of this application are not intended to limit the protection scope of this application.

The technical solutions provided in this application may be applied to various communication systems. The communication system may be a 3rd generation partnership project (3rd generation partnership project, 3GPP) communication system, for example, a 4th generation (4th generation, 4G) long term evolution (long term evolution, LTE) system, a 5th generation (5th generation, 5G) new radio (new radio, NR) system, a vehicle-to-everything (vehicle-to-everything, V2X) system, an LTE-NR hybrid networking system, a device-to-device (device-to-device, D2D) system, a machine-to-machine (machine-to-machine, M2M) communication system, an internet of things (internet of things, IoT), another next generation communication system, and the like. Alternatively, the communication system may be a non-3GPP communication system. This is not limited.

The communication system to which this application is applicable is merely an example for description, and the communication system to which this application is applicable is not limited thereto. This is uniformly described herein, and details are not described below again.

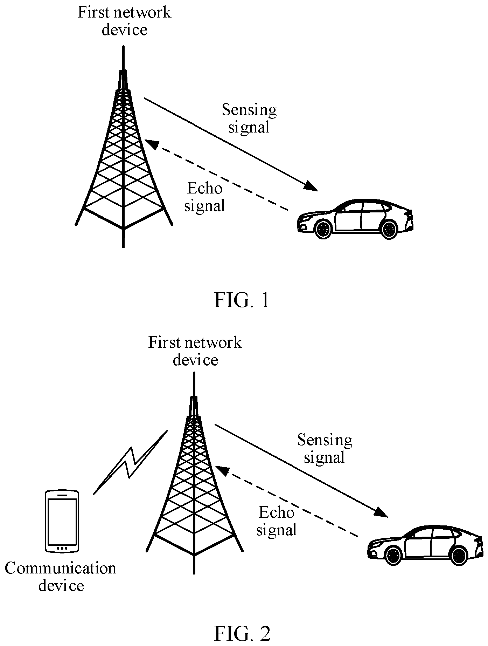

FIG. 1 is a diagram of a structure of a communication system according to this application. The system includes a first network device.

Optionally, the first network device has a sensing function; in other words, the first network device supports sensing. For example, refer to FIG. 1. The first network device may send a sensing signal.

The sensing signal may be reflected by a reflector in an environment to form an echo signal. A location, a speed, and the like of the reflector may be sensed by using the echo signal. The echo signal may also be referred to as a reflected signal.

Further, the first network device further has a communication function. For example, FIG. 2 is a diagram of a structure of an integrated sensing and communication system according to this application. The integrated sensing and communication system is a system integrating a communication function and a sensing function. Integrated sensing and communication has the following advantages: Communication and radar sensing functions share hardware, so that hardware costs are reduced. The sensing function can be directly deployed on existing sites, so that deployment is convenient. The integrated sensing and communication facilitates collaborative networking, and a sensing result is used to assist in communication, to improve communication quality.

In the integrated sensing and communication system, the first network device may send a communication signal to communicate with a communication device.

Optionally, the first network device may perform sensing and communication in a time division multiplexing manner. Alternatively, sensing and communication may be performed in another multiplexing manner such as frequency division, space division, or code division.

Optionally, the echo signal of the sensing signal may be received by a device that sends the sensing signal, that is, A sends the sensing signal and A receives the echo signal. For example, refer to FIG. 1 or FIG. 2. The first network device may send the sensing signal and receive the echo signal of the sensing signal. Alternatively, the echo signal of the sensing signal may be received by another device, that is, A sends the sensing signal and B receives the echo signal.

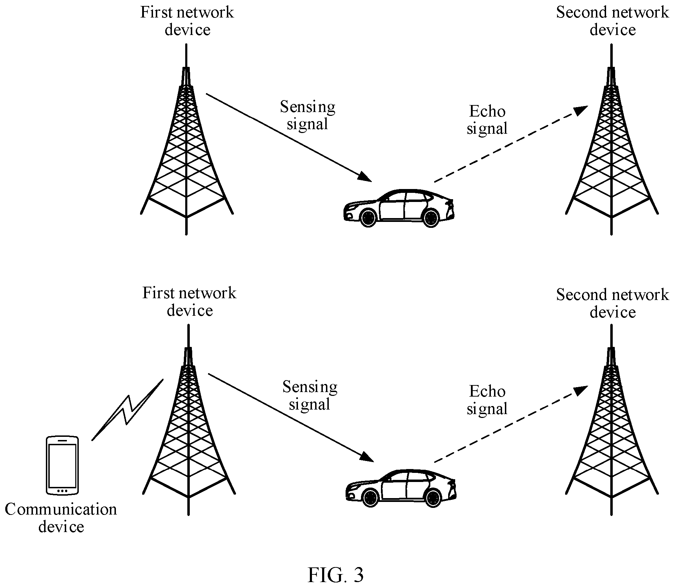

In a possible implementation, as shown in FIG. 3, the echo signal of the sensing signal sent by the first network device may be received by a second network device. In other words, the first network device sends the sensing signal, and the second network device receives the echo signal of the sensing signal.

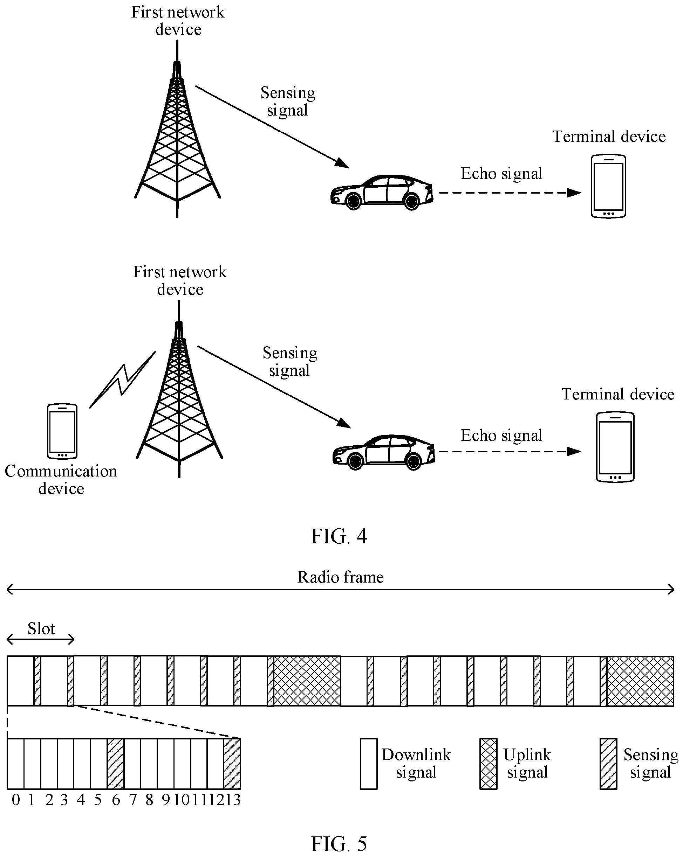

In another possible implementation, as shown in FIG. 4, the echo signal of the sensing signal sent by the first network device may be received by a terminal device. In other words, the first network device sends the sensing signal, and the terminal device receives the echo signal of the sensing signal.

Optionally, a network device in this application is a network side device having a wireless transceiver function. For example, the network device may be an evolved NodeB (evolved NodeB, eNB or eNodeB) in an LTE or LTE-advanced (LTE-Advanced, LTE-A) system, for example, a conventional macro base station eNB and a micro base station eNB in a heterogeneous network scenario; or may be a next generation NodeB (next generation NodeB, gNodeB or gNB) in a 5G system; or may be a transmission reception point (transmission reception point, TRP) or a subsequently evolved NodeB of 3GPP; or may be an access node (access point, AP) in a Wi-Fi system; or may be a wireless relay node or a wireless backhaul node; or may be a device that implements a base station function in an IoT, V2X, D2D, or M2M, for example, a road side unit (road side unit, RSU) in V2X.

Optionally, the first network device and the second network device may be network devices of a same type, or may be network devices of different types.

Optionally, the terminal device may be a user side device having a wireless transceiver function. The terminal device may also be referred to as user equipment (user equipment, UE), a terminal, an access terminal, a user unit, a user station, a mobile station (mobile station, MS), a remote station, a remote terminal, a mobile terminal (mobile terminal, MT), a user terminal, a wireless communication device, a user agent, a user apparatus, or the like. The terminal may be, for example, a wireless terminal in an IoT, V2X, D2D, M2M, a 5G network, or a future evolved PLMN. The terminal device may be deployed on land, including an indoor or outdoor terminal device, or a handheld or vehicle-mounted terminal device; or may be deployed on water (for example, on a ship); or may be deployed in the air (for example, on an aircraft, a balloon, or a satellite).

For example, the terminal device may be an uncrewed aerial vehicle (unmanned aerial vehicle, UAV), an IoT device (for example, a sensor, an electricity meter, or a water meter), a V2X device, a station (station, ST) in a wireless local area network (wireless local area network, WLAN), a cellular phone, a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a computing device, another processing device connected to a wireless modem, a vehicle-mounted device, a wearable device (which may also be referred to as a wearable smart device), a tablet computer or a computer having a wireless transceiver function, a virtual reality (virtual reality, VR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a vehicle having a vehicle-to-vehicle (vehicle-to-vehicle, V2V) communication capability, an intelligent connected vehicle, an uncrewed aerial vehicle having a UAV to UAV (UAV to UAV, U2U) communication capability, or a wireless apparatus (for example, a communication module, a modem, a chip, or a chip system) built in the foregoing device. The terminal may be mobile or fixed. This is not specifically limited in this application.

Optionally, the reflector may be any tangible object that can reflect an electromagnetic wave, for example, a ground object such as a mountain, a forest, or a building, and may further include a movable object such as a vehicle, an uncrewed aerial vehicle, a pedestrian, or a terminal device. An object that is in the reflector and that can be sensed by the first network device, the second network device, or the terminal device may be referred to as a sensing target, a sensed target, a detected target, a sensed object, a detected object, a sensed device, or the like. In the following embodiments of this application, an example in which the object is referred to as the sensing target is used for description.

With reference to the accompanying drawings, the following describes methods provided in embodiments of this application. It may be understood that in embodiments of this application, an execution body may perform a part or all of the steps in embodiments of this application. The steps or operations are merely examples. In embodiments of this application, other operations or variations of various operations may be further performed. In addition, the steps may be performed in a sequence different from a sequence presented in embodiments of this application, and not all the operations in embodiments of this application may be necessarily performed.

It should be noted that, in the following embodiments of this application, names of messages between devices, names of parameters in messages, or other names are merely examples, and there may be other names in specific implementations. This is not specifically limited in embodiments of this application.

For example, a method provided in the following embodiments of this application may be applied to a sensing scenario. Certainly, an application scenario of this application is merely described herein as an example. The application scenario imposes no limitation on this application, and an application scenario of the method provided below is not specifically limited in this application. For example, the method may be further used in an integrated sensing and communication scenario or another sensing-related scenario.

For ease of understanding of the technical solutions in embodiments of this application, terms related to this application are first briefly described as follows.

A slot (slot) is a minimum scheduling unit of a time domain resource. For example, in NR, one slot may include 14 orthogonal frequency division multiplexing (orthogonal frequency division multiplexing, OFDM) symbols, and a cyclic prefix (cyclic prefix, CP) of each OFDM symbol is a normal CP; or one slot may include 12 OFDM symbols, and a CP of each OFDM symbol is an extended CP; or one slot may include seven OFDM symbols, and a CP of each OFDM symbol is a normal CP. It should be understood that the foregoing examples are merely used for description, and shall not constitute any limitation on this application. In consideration of system forward compatibility, a slot format is not limited to the foregoing examples.

In NR, for different subcarrier spacings (subcarrier spacings, SCSs), 1 millisecond (millisecond, ms) may include different quantities of slots. For example, when the subcarrier spacing is 15 kilohertz (kilohertz, kHz), 1 ms includes one slot, and the slot occupies 1 ms. When the subcarrier spacing is 30 kHz, 1 ms includes two slots, and each slot occupies 0.5 ms.

A time domain symbol is a minimum unit of a time domain resource. A time length of the time domain symbol is not limited in embodiments of this application. For example, for different SCSs, lengths of a time domain symbol may be different.

The time domain symbol may be an uplink symbol or a downlink symbol. By way of example but not limitation, the uplink symbol may be, for example, a single carrier-frequency division multiple access (single carrier-frequency division multiple access, SC-FDMA) symbol or an OFDM symbol, and the downlink symbol may be, for example, an OFDM symbol.

In an integrated sensing and communication system, to balance requirements for communication performance and sensing performance of time domain resources, a sensing signal pattern needs to be designed. For example, as shown in FIG. 5, a network device may send one sensing signal on every seven downlink time domain symbols. However, based on a sending manner of sending one sensing signal in every seven downlink time domain symbols, resource overheads occupied by the sensing signal are large.

To reduce the resource overheads occupied by the sensing signal, a sending periodicity of the sensing signal may be increased. However, after the sending periodicity of the sensing signal is increased, an interval between two adjacent sensing signals is increased. A larger interval between sensing signals indicates a smaller sensing speed measurement range. Therefore, if only an interval between sensing signals is increased, although resource overheads are reduced, a speed measurement range is also reduced.

Based on this, this application provides a communication method, to reduce resource overheads occupied by a signal. In addition, a speed measurement range may remain unchanged when the resource overheads are reduced.

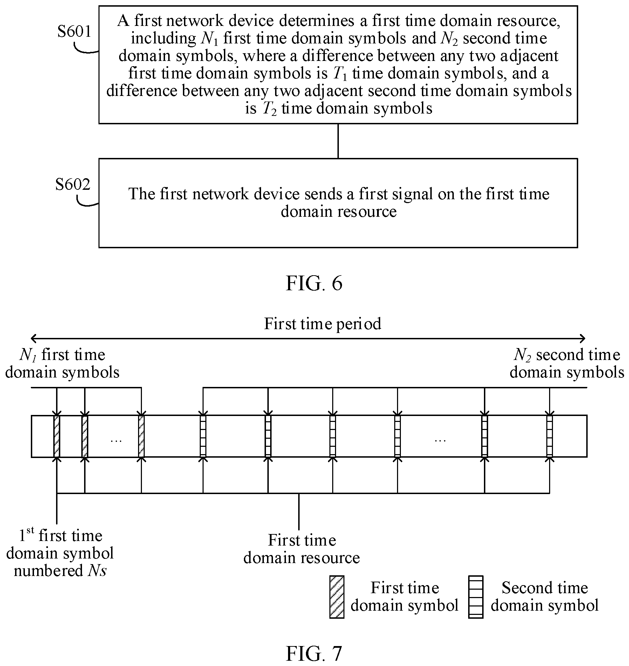

FIG. 6 shows a communication method according to an embodiment of this application. The communication method includes the following steps.

S601: A first network device determines a first time domain resource.

The first time domain resource includes $N_1$ first time domain symbols and $N_2$ second time domain symbols. A difference between any two adjacent first time domain symbols in the $N_1$ first time domain symbols is $T_1$ time domain symbols. A difference between any two adjacent second time domain symbols in the $N_2$ second time domain symbols is $T_2$ time domain symbols. $N_1$, $N_2$, $T_1$, and $T_2$ are positive integers.

$T_2 > T_1$. In other words, a time domain interval between any two adjacent second time domain symbols is greater than a time domain interval between any two adjacent first time domain symbols. Certainly, $T_2$ may alternatively be equal to $T_1$.

Optionally, the first time domain resource is a downlink resource. The first time domain symbol and the second time domain symbol are downlink time domain symbols.

Optionally, that the first time domain resource includes $N_1$ first time domain symbols and $N_2$ second time domain symbols may be understood as that the first time domain resource occupies $N_1$ first time domain symbols and $N_2$ second time domain symbols, or the first time domain resource consists of $N_1$ first time domain symbols and $N_2$ second time domain symbols. In other words, the first time domain resource occupies $N_1 + N_2$ time domain symbols.

Optionally, that a difference between any two adjacent first time domain symbols is $T_1$ time domain symbols may be understood as that any two adjacent first time domain symbols are separated by $T_1 - 1$ time domain symbols, or a difference between numbers of any two adjacent first time domain symbols is $T_1$. For an explanation of the difference between any two adjacent second time domain symbols being $T_2$ time domain symbols, refer to the descriptions of any two adjacent first time domain symbols. Details are not described herein again.

It should be noted that a number in this application may also be referred to as an index. For example, a number of a time domain symbol may also be referred to as an index of the time domain symbol, and the number of the time domain symbol and the index of the time domain symbol may be replaced with each other.

Optionally, the first time domain symbol and the second time domain symbol are merely used to distinguish between time domain symbols at different time domain locations. Both the first time domain symbol and the second time domain symbol are time domain symbols, and time domain lengths of the first time domain symbol and the second time domain symbol are the

same.

Optionally, $T_1$ may also be referred to as a first periodicity, and $T_2$ may also be referred to as a second periodicity. To be specific, the first time domain resource includes $N_1$ first time domain symbols whose periodicity is the first periodicity and $N_2$ second time domain symbols whose periodicity is the second periodicity.

Optionally, the first time domain resource is in a first time period. The first time period may occupy N time domain symbols, or the first time period includes N time domain symbols. In other words, the first time period occupies N time domain symbols, and the N time domain symbols may include $N_1 + N_2$ time domain symbols occupied by the first time domain resource. In addition to the time domain symbols occupied by the first time domain resource, other $N-(N_1+N_2)$ time domain symbols in the first time period may be used to send a communication signal and the like. A signal sent on the other $N-(N_1+N_2)$ time domain symbols in the first time period is not specifically limited in this application.

Optionally, when there is a sensing service requirement, or when sensing needs to be performed, the first network device may first determine the first time period and then determine the first time domain resource in the first time period.

Optionally, in a sensing scenario, a quantity N of time domain symbols occupied by the first time period may be determined based on the sensing service requirement, for example, may be determined based on sensing speed measurement precision or a sensing speed measurement range. Optionally, that a quantity of time domain symbols occupied by the first time period is N may also be understood that a time length of the first time period is $N \times M$ milliseconds (ms). M is a time length (in a unit of ms) of one time domain symbol.

It should be noted that the first time period in this application may also be referred to as coherent processing time, coherent processing time, or a slow time length, and the names may be replaced with each other. This is not specifically limited in this application.

Optionally, a 1st first time domain symbol in the $N_1$ first time domain symbols may be a time domain symbol numbered $N_S$ in the first time period. When the time domain symbols in the first time period are numbered from 0, the 1st first time domain symbol in the $N_1$ first time domain symbols is an $(N_s+1)^{th}$ time domain symbol in the first time period.

For example, with reference to the foregoing description, a location relationship between the first time period, the first time domain resource, the first time domain symbol, and the second time domain symbol may be shown in FIG. 7. Refer to FIG. 7. The first time period includes the first time domain resource, and the first time domain resource includes the $N_1$ first time domain symbols and the $N_2$ second time domain symbols.

It should be noted that FIG. 7 merely shows an example of the location relationship between the first time period, the first time domain resource, the first time domain symbol, and the second time domain symbol, and an uplink resource is not shown. During actual application, the first time period may include an uplink resource.

S602: The first network device sends a first signal on the first time domain resource.

To be specific, the first network device sends the first signal on the $N_1$ first time domain symbols and the $N_2$ second time domain symbols. In other words, the first signal may include a first part of signals and a second part of signals, the first part of signals include $N_1$ signals, and the second part of signals include $N_2$ signals. A sending periodicity of the $N_1$ signals included in the first part of signals is $T_1$, and a sending periodicity of the $N_2$ signals included in the second part of signals is $T_2$.

Optionally, the first signal is used for sensing, or the first signal is a sensing signal. For example, the sensing signal may be understood as an OFDM signal obtained by modulating a particular sequence on a subcarrier. The particular sequence may be a ZC sequence, a Gold sequence, or the like, or may be a random data symbol, for example, a random data symbol modulated in a manner such as quadrature phase shift keying (quadrature phase shift keying, QPSK) or 16 quadrature amplitude modulation (quadrature amplitude modulation, QAM). This is not specifically limited in this application.

Optionally, one sensing signal may be understood as one time domain symbol in which one particular sequence is modulated on a subcarrier, or one sensing signal carries (or corresponds to) one particular sequence, or one sensing signal is generated by using one particular sequence.

Optionally, the first signal may include a plurality of sensing signals. When the first time domain resource includes $N_1 + N_2$ time domain symbols, the first signal may include $N_1 + N_2$ sensing signals. The sensing signals sent on different time domain symbols in the first time domain resource may be the same or may be different. For example, a sensing signal 1 may be sent on all time domain symbols in the first time domain resource. Alternatively, a sensing signal 1 may be sent on the 1st first time domain symbol in the first time domain resource, and a sensing signal 2 may be sent on other time domain symbols. This is not specifically limited in this application.

According to this solution, the first network device sends the first signal on the $N_1$ first time domain symbols with a periodicity of $T_1$ and the $N_2$ second time domain symbols with a periodicity of $T_2$. Because $T_2 > T_1$, compared with a case in which a signal is always sent with the periodicity of $T_1$ in the first time period, the solution of this application can reduce overheads. When the first signal is the sensing signal, the solution of this application can reduce resource overheads occupied by the sensing signal.

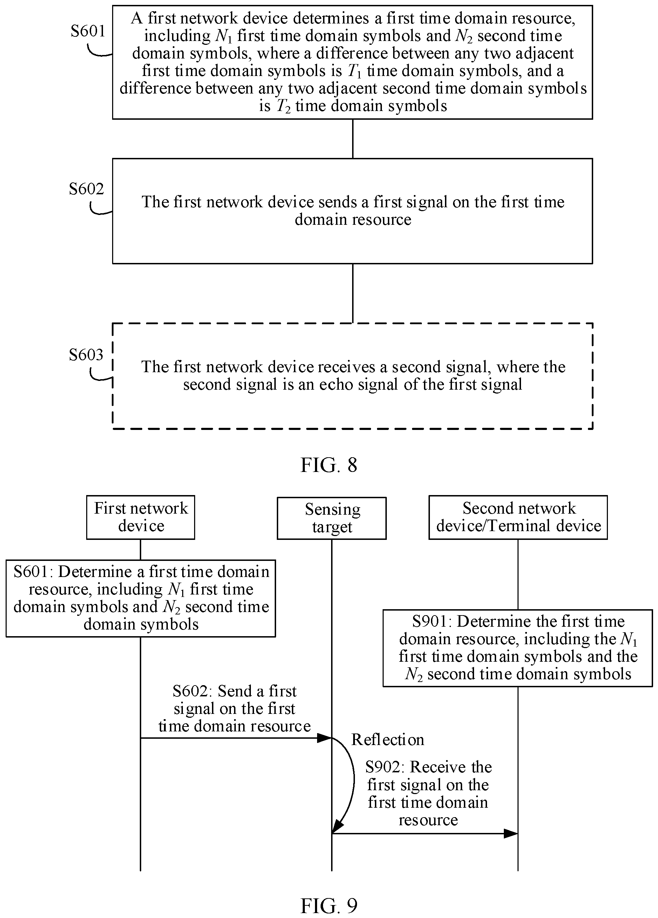

In some sensing scenarios, for example, in a scenario in which A sends a sensing signal and A receives an echo signal, as shown in FIG. 8, the communication method may further include the following step S603.

S603: The first network device receives a second signal.

The second signal is an echo signal of the first signal, or the second signal is a reflected signal of the first signal.

Optionally, the second signal may be understood as an echo signal formed by transmitting the first signal through a radio channel and reflecting the first signal by a sensing target. For example, the sensing target may be an object that can reflect an electromagnetic wave in an environment in which the first network device is located, for example, a pedestrian or a vehicle. In other words, it may be considered that the second signal is a superposition of a plurality of delay versions of the first signal that have a Doppler frequency shift. Therefore, that the second signal is received may also be understood as that the first signal is received or the first signal is detected.

Optionally, that the first network device receives a second signal may include: The first network device receives the second signal on the first time domain resource. For example, because a transmission speed of the electromagnetic wave is high and reflection time is short, the first network device may receive the second signal on a time domain resource on which the first signal is sent, in other words, the time domain resource for sending the first signal may be the same as the time domain resource for receiving the first signal.

Optionally, when a transmitter of the first network device sends the first signal on the first time domain resource, a receiver of the first network device may receive the second signal on the first time domain resource.

Optionally, when the first signal includes a plurality of sensing signals, it may be considered that the second signal includes a same quantity of echo signals of the sensing signals.

Optionally, after receiving the second signal, the first network device may perform sensing processing based on the second signal, to sense the sensing target to obtain sensing information, for example, obtain a location, a speed, and a distance of the sensing target. For example, the sensing information may be used to assist in communication and the like. For example, the first network device may assist in beam management based on the sensing information, and direct a beam direction of the first network device to the sensing target, to reduce beam scanning overheads. Optionally, when the first signal includes a plurality of sensing signals, the first network device may perform joint sensing processing on echo signals of all sensing signals in the first time period, that is, perform joint sensing processing on all echo signals in the second signal. For example, the first network device sends the sensing signal on the first time domain resource in the first time period, receives the echo signal of the sensing signal, and performs joint sensing processing on all echo signals received in the first time period. The joint sensing processing may also be referred to as coherent accumulation, coherent processing, coherent accumulation, or coherent processing.

Optionally, the first network device may send the sensing signal in a plurality of non-overlapping first time periods. Correspondingly, the first network device may perform sensing processing in the plurality of first time periods. For example, the time length of the first time period is 10 ms, and the first network device performs self-sending and self-receiving. The first network device may send a sensing signal on a first time domain resource in 0 ms to 10 ms (one first time period), receive an echo signal of the sensing signal, and perform sensing processing; send a sensing signal again on a first time domain resource in 10 ms to 20 ms (another first time period), receive an echo signal of the sensing signal, and perform sensing processing; and so on, until sensing ends.

In some other sensing scenarios, for example, in a scenario in which A sends a sensing signal and B receives an echo signal, as shown in FIG. 9, the communication method may further include the following steps.

S901: A receiving device determines the first time domain resource.

The receiving device may be a second network device or a terminal device. For example, the terminal device may be located in coverage of the first network device.

Optionally, that a receiving device determines the first time domain resource may include: The receiving device determines the first time domain resource based on an indication of the first network device. For example, the first network device may send indication information to the receiving device, to indicate a location of the first time domain resource or indicate the first time domain resource by using the indication information. After receiving the indication information, the receiving device may determine the first time domain resource based on the indication information.

Optionally, the first network device may send the indication information to the receiving device after step S601 and before step S602.

Optionally, the indication information may explicitly indicate the location of the first time domain resource. For example, the indication information may include an index of each time domain symbol included in the first time domain resource. Alternatively, the indication information may implicitly indicate the location of the first time domain resource. For example, the indication information may indicate a parameter for determining the location of the first time domain resource, for example, indicate at least one of the following: a start location of the first time period, the time length of the first time period, a quantity $N_1$ of first time domain symbols, a quantity $N_2$ of second time domain symbols, information about an interval $T_1$ between any two adjacent first time domain symbols, information about an interval $T_2$ between any two adjacent second time domain symbols, and a number $N_S$ of the 1st first time domain symbol in the first time period.

Optionally, when the receiving device is the second network device, the first network device may send the indication information to the second network device through an interface between network devices. When the receiving device is the terminal device, the first network device may send downlink control information (downlink control information, DCI) to the terminal device, where the DCI carries the indication information. Certainly, the first network device may alternatively send the indication information in a radio resource control (radio resource control, RRC) message, a MAC control element (MAC control element, MAC CE), other signaling, or another control element. This is not specifically limited in this application.

S902: The receiving device receives the first signal on the first time domain resource.

Optionally, the first signal received by the receiving device on the first time domain resource may be understood as an echo signal or a reflected signal of the first signal sent by the first network device in step S602. Therefore, step S902 may also be described as follows: The receiving device receives a second signal on the first time domain resource. For descriptions of the second signal, refer to related descriptions in step S603. Details are not described herein again.

Optionally, after receiving the first signal, the receiving device may sense a sensing target based on the first signal, to obtain sensing information, for example, obtain a location, a speed, and a distance of the sensing target. For example, the sensing information may be used to assist the receiving device in subsequent processing.

For example, when the receiving device is the second network device, the second network device may assist in beam management based on the sensing information, and direct a beam direction of the second network device to the sensing target, to reduce beam scanning overheads.

Alternatively, when the receiving device is a terminal device in V2X, for example, a vehicle-mounted device, the terminal device may perform an operation such as self-driving or assisted driving based on information such as a location and a speed of a sensing target and a distance between the sensing target and the terminal device that are learned of by the terminal device. For example, when it is sensed that the sensing target is close to the terminal device or the sensing target has a high speed, a vehicle may slow down or stop, to improve driving safety.

The foregoing describes an overall procedure of the communication method provided in this application. The following describes parameters related to the first time domain resource.

In a possible implementation, $T_2$ is determined by $T_1$, or $T_2$ is a function of $T_1$. In other words, a relation-

ship between $T_2$ and $T_1$ may be expressed as follows:

$$T_2 = f_1(T_1).$$

$f_1$ represents a function relationship that is satisfied between $T_2$ and $T_1$. For example, $T_2$ may be an integer multiple of $T_1$, that is, $T_2 = A \times T_1$, and $A$ is a positive integer. For example, $T_2 = 2 \times T_1$.

In an example, a value of $T_2$ may specifically satisfy the following formula:

$$T_2 = (N_1 + 1) \times T_1.$$

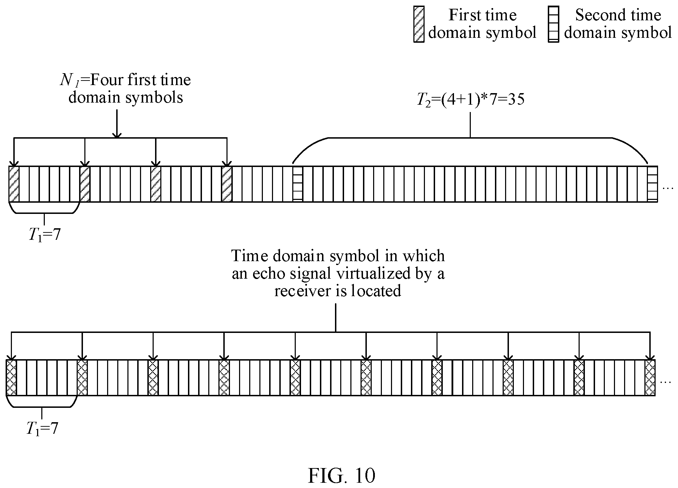

For example, assuming that $N_1$ is equal to 4 and $T_1$ is equal to 7, $T_2$ is equal to 35. As shown in FIG. 10, a difference between two adjacent second time domain symbols is 35 time domain symbols. For the receiving device, the receiving device may virtualize echo signals with a periodicity of seven time domain symbols that are distributed at equal intervals. As shown in FIG. 10, the echo signals that are distributed at equal intervals and that are virtualized by the receiving device may be located on time domain symbols filled with diamonds.

It should be noted that FIG. 10 is merely used as an example to describe a relationship between $T_2$, $N_1$, and $T_1$, and an uplink symbol is not shown. Time domain symbol distribution shown in FIG. 10 does not represent distribution of the first time domain symbol and the second time domain symbol in the solution of this application when there is an uplink symbol.

Optionally, in the first time domain resource, the $N_1$ first time domain symbols are located before the $N_2$ second time domain symbols. In other words, intervals between the first $N_1$ time domain symbols in the first time domain resource are small, and intervals between remaining time domain symbols are large.

Optionally, a 1st second time domain symbol in the $N_2$ second time domain symbols is a $T_1$th time domain symbol after a last first time domain symbol in the $N_1$ first time domain symbols. In other words, the 1st second time domain symbol in the $N_2$ second time domain symbols and the last first time domain symbol in the $N_1$ first time domain symbols are separated by $T_1$ - 1 time domain symbols, or a difference between a number of the 1st second time domain symbol in the $N_2$ second time domain symbols and a number of the last first time domain symbol in the $N_1$ first time domain symbols is $T_1$.

In other words, in the first $N_1$ + 1 time domain symbols in the first time domain resource, intervals between any two adjacent time domain symbols are equal, or the $N_1$ + 1 time domain symbols are distributed at equal intervals.

When the first time domain resource includes the $N_1$ first time domain symbols with the periodicity of $T_1$, the $N_2$ second time domain symbols with the periodicity of $T_2$, $T_2 = (N_1 + 1) \times T_1$, and the 1st second time domain symbol in the $N_2$ second time domain symbols and the last first time domain symbol in the $N_1$ first time domain symbols are separated by the $T_1$ -1 time domain symbols, an index difference between any two time domain symbols in the first time domain resource may form a set $\{k \times T_1 | k = 1, 2, ..., (N_1+1) \times N_2-1\}$. Based on this property, the receiving device may virtualize (or calculate or construct), based on a signal processing algorithm and the received second signal, $(N_1+1) \times N_2-1$ echo signals with the periodicity of $T_1$, and perform joint sensing processing on the $(N_1+1) \times N_2-1$ echo signals.

In a solution in which the sensing signal is always sent with the periodicity of $T_1$ in the first time period, the receiving device may receive echo signals whose quantity is close to $(N_1+1) \times N_2-1$ and whose periodicity is T1, and perform joint sensing processing on the echo signals.

In other words, in this solution, when sensing the sensing target based on the second signal, the receiving device may virtualize the echo signals that are distributed at equal intervals with the periodicity of $T_1$, so that the receiving device obtains echo signals whose quantity is similar to and periodicity is the same as that in the solution in which the sensing signal is always sent with the periodicity of $T_1$ in the first time period. Therefore, compared with the solution in which the sensing signal is always sent with the periodicity of $T_1$ in the first time period, a sensing speed measurement range in the solution of this application remains unchanged. Therefore, based on the solution of this application, resource overheads of the sensing signal can be reduced when the sensing speed measurement range remains unchanged.

Optionally, the quantity $N_2$ of the second time domain symbols satisfies the following formula:

$$N_2 \leq \left\lfloor \left( N - 1 - N_s - N_1 \times T_1 \right) / T_2 \right\rfloor + 1 .$$

$N$ is a total quantity of time domain symbols occupied by the first time period, $N_s$ is a number of the 1st first time domain symbol in the $N_1$ first time domain symbols in the first time period, and $\lfloor \ \rfloor$ represents rounding down. When a value of $N_2$ satisfies the foregoing formula, it can be ensured that $N_2$ time domain symbols are in the first time period, or it can be ensured that the first time domain resource is in the first time period, or it can be ensured that a length of the first time domain resource does not exceed the first time period.

Optionally, this application further provides the following three groups of values of $N_1$ and $T_1$:

$$N_1 = 4, T_1 = 7 .$$

$$N_1 = 6, T_1 = 5 .$$

$$N_1 = 34, T_1 = 1 .$$

Based on the foregoing three groups of values, when a slot configuration in the first time period is DDDSU, the number $N_s$ of the 1st first time domain symbol in the $N_1$ first time domain symbols in the first time period may satisfy the following:

$$7 \leq N_s \leq 9 , \ \ 5 \leq N_s \leq 7 , \text{ or } \ 1 \leq N_s \leq 3 .$$

Optionally, that a slot configuration in the first time period is DDDSU may also be understood as that a slot configuration pattern in the first time period is DDDSU, where D represents a downlink slot (time domain symbols thereof are all downlink time domain symbols), S represents a slot including an uplink time domain symbol and a downlink time domain symbol, and U represents an uplink slot (time domain symbols thereof are all uplink slots). The slot S including the uplink time domain symbol and the downlink time domain symbol may also be referred to as a self-contained slot or a special slot. For ease of description, the slot S is referred to as the self-contained slot in the following embodiments of this application. Certainly, the slot S including the uplink time domain symbol and the downlink time domain symbol may also have another name. This is not specifically limited in this application.

For example, that a slot configuration in the first time period is DDDSU may indicate that in every five slots in the first time period, a slot #0, a slot #1, and a slot #2 are downlink slots, a slot #4 is an uplink slot, and a slot #3 is a self-contained slot.

Optionally, that a slot configuration in the first time period is DDDSU does not limit the first time period to occupy only five slots. A slot in the first time period may appear repeatedly with a periodicity of DDDSU. For example, when the first time period occupies 10 slots, and the slot configuration in the first time period is DDDSU, in the 10 slots, a slot #0, a slot #1, and a slot #2 are downlink slots, a slot #4 is an uplink slot, a slot #3 is a self-contained slot, a slot #5, a slot #6, and a slot #7 are downlink slots, a slot #9 is an uplink slot, and a slot #8 is a self-contained slot.

It may be understood that the first time period occupies B slots, or it may be understood that the first time period occupies $B \times C$ time domain symbols, that is, $N = B \times C$. $C$ is a quantity of time domain symbols included in one slot.

When a slot configuration in the first time period is DDDSUDDSUU or DDSUU, the number $N_s$ of the 1st first time domain symbol in the $N_1$ first time domain symbols in the first time period may satisfy the following:

$$7 \leq N_s \leq 9 , \ \ 5 \leq N_s \leq 7 , \text{ or } \ 1 \leq N_s \leq 3 .$$

That a slot configuration is DDDSUDDSUU may indicate that in every 10 slots in the first time period, a slot #0, a slot #1, a slot #2, a slot #5, and a slot #6 are downlink slots, a slot #4, a slot #8, and a slot #9 are uplink slots, and a slot #3 and a slot #7 are self-contained slots. That a slot configuration is DDSUU may indicate that in every five slots in the first time period, a slot #0 and a slot #1 are downlink slots, a slot #3 and a slot #4 are uplink slots, and a slot #2 is a self-contained slot. For other descriptions of the slot configuration, refer to related descriptions provided when the slot configuration in the first time period is DDDSU. Details are not described herein again.

Optionally, based on the three groups of values of $N_1$ and $T_1$, when the first time period occupies 40 slots, $N_2 = 15, T_2 = 35$; or when the first time period occupies 80 slots, $N_2 = 31, T_2 = 35$.

Based on the foregoing descriptions, for example, when the first time period occupies 40 slots, and the slot configuration in the first time period is DDDSU, values of $N_1$, $N_2$, $T_1$, $T_2$, and $N_S$ may be as follows:

$$N_1 = 4, T_1 = 7, N_2 = 15, T_2 = 35, 7 \leq N_s \leq 23 \,;$$

$$N_1 = 6, T_1 = 5, N_2 = 15, T_2 = 35, 5 \leq N_s \leq 21 \,;$$

or

$$N_1 = 34, T_1 = 1, N_2 = 15, T_2 = 35, 1 \leq N_s \leq 17 \,.$$

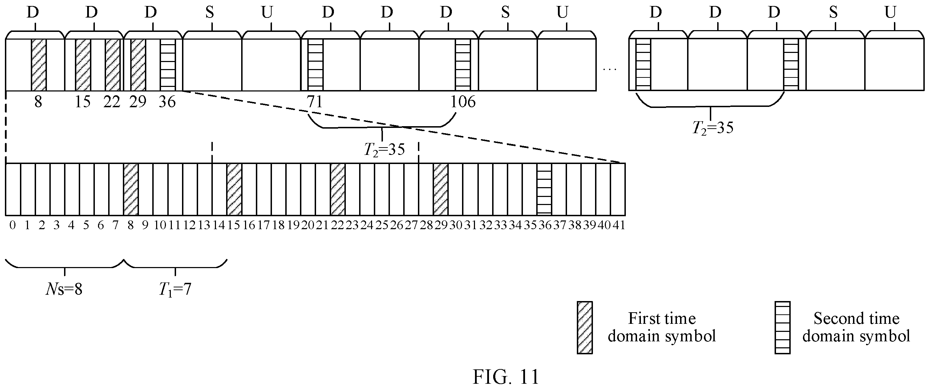

For example, the slot configuration in the first time period is DDDSU, $N_1 = 4, T_1 = 7, N_s = 8$, and each slot includes 14 time domain symbols. Distribution of the first time domain resource in the first time period may be shown in FIG. 11. Refer to FIG. 11. A number of a 1st first time domain symbol in four first time domain symbols is 8, and numbers of remaining three first time domain symbols are sequentially 15, 22, and 29. A 1st second time domain symbol in 15 second time domain symbols is a seventh symbol after a last first time domain symbol (numbered 29), and is numbered 36. Numbers of remaining second time domain symbols are sequentially 71, 106, 141, 176, 211, ..., and X. X is less than or equal to 559.

Based on the foregoing values, when $N_1 = 4, T_1 = 7, N_2 = 15, T_2 = 35, 7 \leq N_s \leq 23$, resource overheads of the sensing signal are minimum, and overheads can be reduced to a maximum extent. When $N_1 = 6, T_1 = 5, N_2 = 15, T_2 = 35, 5 \leq N_s \leq 21$, $T_1$ is small, in other words, density of the $N_1$ first time domain symbols is high. Therefore, the sensing speed measurement range is large. When $N_1 = 34, T_1 = 1, N_2 = 15, T_2 = 35, 1 \leq N_s \leq 17$, a large quantity of sensing signals may be sent, to increase energy of echo signals that is accumulated in the first time period, and enlarge sensing coverage.

The first time period occupies 80 slots, and when the slot configuration in the first time period is DDDSU, values of $N_1$, $N_2$, $T_1$, $T_2$, and $N_S$ may be as follows:

$$N_1 = 4, T_1 = 7, N_2 = 31, T_2 = 35, 7 \leq N_s \leq 23 \,;$$

$$N_1 = 6, T_1 = 5, N_2 = 31, T_2 = 35, 5 \leq N_s \leq 21 \,;$$

or

$$N_1 = 34, T_1 = 1, N_2 = 31, T_2 = 35, 1 \leq N_s \leq 17 \,.$$

The first time period occupies 40 slots, and when the slot configuration in the first time period is DDDSUDDSUU or DDSUU, values of $N_1$, $N_2$, $T_1$, $T_2$, and $N_S$ may be as follows:

$$N_1 = 4, T_1 = 7, N_2 = 15, T_2 = 35, 7 \leq N_s \leq 9 \,;$$

$$N_1 = 6, T_1 = 5, N_2 = 15, T_2 = 35, 5 \leq N_s \leq 7 \,;$$

or

$$N_1 = 34, T_1 = 1, N_2 = 15, T_2 = 35, 1 \leq N_s \leq 3 \,.$$

The first time period occupies 80 slots, and when the slot configuration in the first time period is DDDSUDDSUU or DDSUU, values of $N_1$, $N_2$, $T_1$, $T_2$, and $N_S$ may be as follows:

$$N_1 = 4, T_1 = 7, N_2 = 31, T_2 = 35, 7 \leq N_s \leq 9 \,;$$

$$N_1 = 6, T_1 = 5, N_2 = 31, T_2 = 35, 5 \leq N_s \leq 7 \,;$$

or

$$N_1 = 34, T_1 = 1, N_2 = 31, T_2 = 35, 1 \leq N_s \leq 3 \,.$$

In another possible implementation, $T_1$ and $T_2$ are determined by a periodicity factor $M$ and two numbers $a_1$ and $a_2$ that are relatively prime, where $M$ is a positive integer, and $a_1 < a_2$. For example, $T_1$ is determined by $M$ and $a_1$, or $T_1$ is a function of $M$ and $a_1$ ; and $T_2$ is determined by $M$ and $a_2$, or $T_2$ is a function of $M$ and $a_2$. In other words, a relationship between $T_1$, $T_2$, $a_1$, $a_2$, and $M$ may be expressed as follows:

$$T_1 = f_2 \left( M, a_1 \right);$$

and

$$T_2 = f_3 \left( M, a_2 \right).$$

$f_2$ represents a function relationship that is satisfied between $T_1$, $a_1$, and $M$. $f_3$ represents a function relationship that is satisfied between $T_2$, $a_2$, and $M$.

For example, $T_1$ and $T_2$ may satisfy the following formulas:

$$T_1 = M \times a_1, T_2 = M \times a_2 .$$

It should be noted that the periodicity factor $M$ may also have another name, for example, a periodicity coefficient. A name of $M$ is not specifically limited in this application.

Optionally, a location of the 1st first time domain symbol in the $N_1$ first time domain symbols is the same as a location of the 1st second time domain symbol in the $N_2$ second time domain symbols. Alternatively, the 1st first time domain symbol overlaps with the 1st second time domain symbol.

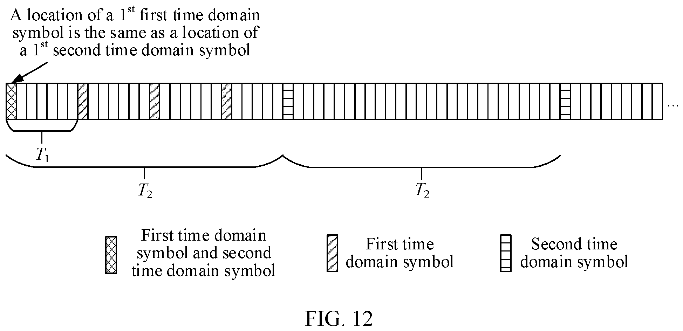

For example, as shown in FIG. 12, a 1st symbol in the figure is used as both the 1st first time domain symbol and the 1st second time domain symbol. It should be noted that FIG. 12 merely describes an example of a location relationship between the 1st first time domain symbol and the 1st second time domain symbol. Values of $T_1$, $T_2$, and $N_1$ shown in the figure do not constitute any limitation on this application, and do not represent a limitation on the values of $T_1$, $T_2$, and $N_1$ in this scenario.

According to this solution, when $T_1$ and $T_2$ satisfies that $T_1 = M \times a_1, T_2 = M \times a_2$, and the location of the 1st first time domain symbol in the $N_1$ first time domain symbols is the same as the location of the 1st second time domain symbol in the $N_2$ second time domain symbols, when sensing the sensing target based on the second signal, the receiving device may virtualize echo signals that are distributed at equal intervals with the periodicity of $T_1$, so that the receiving device obtains echo signals whose quantity is similar to and periodicity is the same as that in the solution in which the sensing signal is always sent with the periodicity of $T_1$ in the first time period. Therefore, compared with the solution in which the sensing signal is always sent with the periodicity of $T_1$ in the first time period, a sensing speed measurement range in the solution of this application remains unchanged. Therefore, based on the solution of this application, resource overheads of the sensing signal can be reduced when the sensing speed measurement range remains unchanged.

Optionally, this application further provides two groups of values of $T_1$, $T_2$, $N_1$, $N_2$, and $N_s$ in the possible implementation:

$$N_1 = 15, T_1 = 36, N_2 = 8, T_2 = 135, 35 \le N_s \le 37;$$

or

$$N_1 = 13, T_1 = 36, N_2 = 8, T_2 = 117, 0 \le N_s \le 2 .$$

For example, the foregoing two groups of values may be applied to a scenario in which the slot configuration in the first time period is DDDSU and the first time period occupies 80 slots. Certainly, the values may be further applied to another scenario. This is not specifically limited in this application.

For example, a first group of values in the foregoing two groups of values may be understood as values when $M = 9, a_1 = 4, a_2 = 15$ , and a second group of values may be understood as values when $M = 9, a_1 = 4, a_2 = 13$.

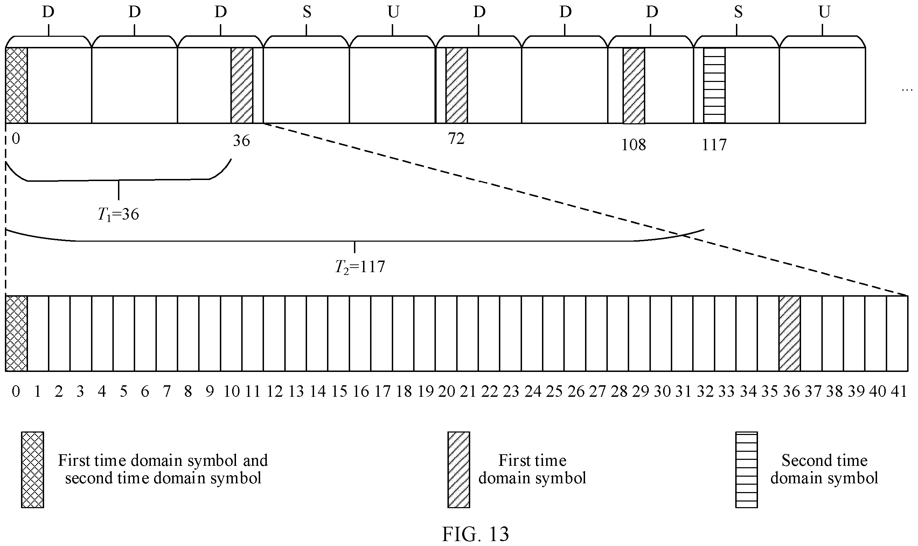

For example, the slot configuration in the first time period is DDDSU, $N_1 = 13, T_1 = 36, N_2 = 8, T_2 = 117, N_s = 0$ , and each slot includes 14 time domain symbols. Distribution of the first time domain resource in the first time period may be shown in FIG. 13. Refer to FIG. 13. A number of a 1st first time domain symbol and a number of a 1st second time domain symbol are 0, numbers of remaining first time domain symbols are sequentially 36, 72, 108, ..., and numbers of remaining second time domain symbols are sequentially 117, 234, 351, ... It should be noted that the foregoing values of $N_1$, $N_2$, $T_1$, $T_2$, and $N_S$ are merely examples for description. During actual application, $N_1$, $N_2$, $T_1$, $T_2$, and $N_S$ may alternatively be other values that satisfy a constraint of this application.

The foregoing uses an example in which the first network device sends the first signal on the first time domain resource for description. In some scenarios, if the first network device needs to enlarge the sensing coverage or increase the energy of the echo signals that is accumulated in the first time period, the first network device may send the first signal on a plurality of groups of time domain resources, where the plurality of groups of time domain resources include the first time domain resource. In other words, step S602 may include: The first network device sends the first signal on the plurality of groups of time domain resources.

Optionally, each of the plurality of groups of time domain resources may have a characteristic similar to that of the first time domain resource. For example, the plurality of groups of time domain resources include a second time domain resource. The first network device may determine the second time domain resource, where the second time domain resource includes $N_1$ third time domain symbols and $N_2$ fourth time domain symbols.

A difference between any two adjacent third time domain symbols in the $N_1$ third time domain symbols is $T_1$ time domain symbols. A difference between any two adjacent fourth time domain symbols in the $N_2$ fourth time domain symbols is $T_2$ time domain symbols. For details, refer to related descriptions of the first time domain resource in step S601.

Optionally, a difference between a 1st time domain symbol in the second time domain resource and a 1st time domain symbol in the first time domain resource is $T_3$ time domain symbols, where $T_3$ is a positive integer. In other words, a difference between an nth time domain symbol in the second time domain resource and an nth time domain symbol in the first time domain resource is $T_3$ time domain symbols, where n=1, 2, ..., or Y. Y is a total quantity of time domain symbols included in the first time domain resource or the second time domain resource.

For example, the slot configuration in the first time period is DDDSU, $N_1 = 4, T_1 = 7, N_s = 8, T_2 = 35, T_3 = 1,$

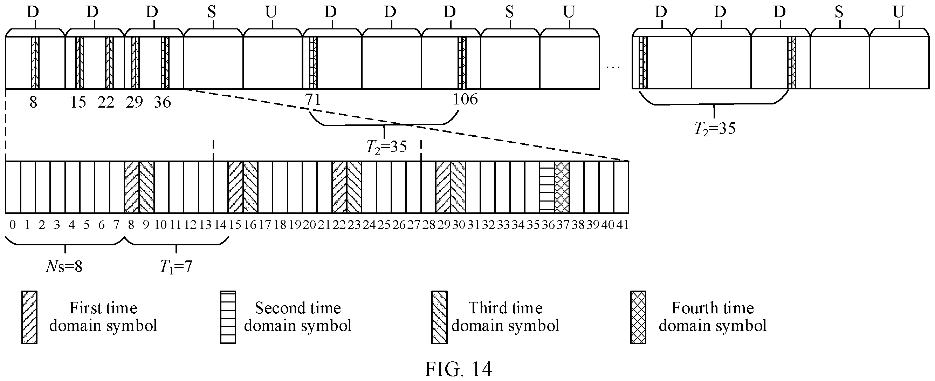

and each slot includes 14 time domain symbols. Distribution of the first time domain resource and the second time domain resource in the first time period may be shown in FIG. 14. Refer to FIG. 14. A number of a $1^{st}$ first time domain symbol in four first time domain symbols is 8, and numbers of remaining three first time domain symbols are sequentially 15, 22, and 29. A number of a $1^{st}$ first time domain symbol in four third time domain symbols is 9, and numbers of remaining three first time domain symbols are sequentially 16, 23, and 30. A $1^{st}$ second time domain symbol in 15 second time domain symbols is a seventh symbol after a last first time domain symbol (numbered 29), and is numbered 36. Numbers of remaining second time domain symbols are sequentially 71, 106, 141, 176, 211, ... A $1^{st}$ fourth time domain symbol in 15 fourth time domain symbols is a seventh symbol after a last third time domain symbol (numbered 30), and is numbered 37. Numbers of remaining fourth time domain symbols are sequentially 72, 107, 142, 177, 212, ...

Based on the solution, the first network device may send the first signal on the plurality of groups of time domain resources, to ensure the sensing coverage or increase the energy of the echo signals that is accumulated in the first time period while reducing resource overheads of the first signal, so as to improve sensing precision.

It should be noted that the foregoing mainly uses the first signal as the sensing signal for description, and this does not mean that in this application, the first signal is limited to being definitely the sensing signal. The first signal may alternatively be another type of signal, for example, a reference signal or a pilot signal. In other words, the solution of this application may be further applied to a scenario other than a sensing scenario, for example, a communication scenario.

It may be understood that, in the foregoing embodiments, the methods and/or the steps implemented by the network device may be implemented by a component (for example, a processor, a chip, a chip system, a circuit, a logical module, or software such as a chip or a circuit) that can be used in the network device; or the methods and/or the steps implemented by the terminal device may be implemented by a component (for example, a processor, a chip, a chip system, a circuit, a logical module, or software such as a chip or a circuit) that can be used in the terminal device.

It may be understood that, to implement the foregoing functions, a communication apparatus includes a hardware structure and/or a software module for performing a corresponding function. A person skilled in the art should easily be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application. In embodiments of this application, the communication apparatus may be divided into functional modules based on the foregoing method embodiment. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely logical function division. In an actual implementation, there may be another division manner.

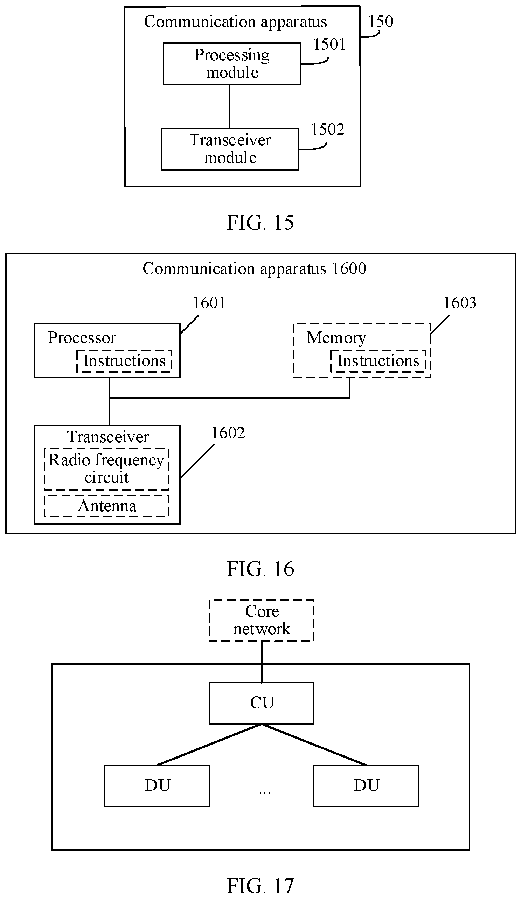

FIG. 15 is a diagram of a structure of a communication apparatus 150. The communication apparatus 150 includes a processing module 1501 and a transceiver module 1502. The communication apparatus 150 may be configured to implement a function of the first network device or the receiving device.

In some embodiments, the communication apparatus 150 may further include a storage module (not shown in FIG. 15), configured to store program instructions and data.

In some embodiments, the transceiver module 1502 may also be referred to as a transceiver unit, configured to implement a sending function and/or a receiving function. The transceiver module 1502 may include a transceiver circuit, a transceiver machine, a transceiver, or a communication interface.

In some embodiments, the transceiver module 1502 may include a receiving module and a sending module, respectively configured to perform receiving steps and sending steps performed by the first network device or the receiving device in the foregoing method embodiment, and/or configured to support another process of the technology described in this specification; and the processing module 1501 may be configured to perform processing (for example, determining and generating) steps performed by the first network device or the receiving device in the foregoing method embodiment, and/or configured to support another process of the technology described in this specification.

When the communication apparatus 150 is configured to implement the function of the first network device, the processing module 1501 is configured to determine a first time domain resource, where the first time domain resource includes $N_1$ first time domain symbols and $N_2$ second time domain symbols, a difference between any two adjacent first time domain symbols in the $N_1$ first time domain symbols is $T_1$ time domain symbols, and a difference between any two adjacent second time domain symbols in the $N_2$ second time domain symbols is $T_2$ time domain symbols, where $T_2 > T_1$, and $N_1$ and $N_2$ are positive integers; and the transceiver module 1502 is configured to send a first signal on the first time domain resource.

Optionally, the transceiver module 1502 is further configured to receive a second signal on the first time domain resource, where the second signal is an echo signal of the first signal.

Optionally, the transceiver module 1502 is further configured to send indication information, where the indication information indicates a location of the first time domain resource.

Optionally, the processing module 1501 is further configured to determine a second time domain resource, where the second time domain resource includes $N_1$ third time domain symbols and $N_2$ fourth time domain symbols, a difference between any two adjacent third time domain symbols in the $N_1$ third time domain symbols is $T_1$ time domain symbols, and a difference between any two adjacent fourth time domain symbols in the $N_2$ fourth time domain symbols is $T_2$ time domain symbols. That the transceiver module 1502 is configured to send a first signal on the first time domain resource includes: The transceiver module 1502 is configured to send the first signal on the first time domain resource and the second time domain resource.

When the communication apparatus 150 is configured to implement the function of the receiving device, the processing module 1501 is configured to determine a first time domain resource, where the first time domain resource includes $N_1$ first time domain symbols and $N_2$ second time domain symbols, a difference between any two adjacent first time domain symbols in the $N_1$ first time domain symbols is $T_1$ time domain symbols, and a difference between any two adjacent second time domain symbols in the $N_2$ second time domain symbols is $T_2$ time domain symbols, where $T_2 > T_1$, and $N_1$ and $N_2$ are positive integers; and the transceiver module 1502 is configured to receive a first signal on the first time domain resource.

Optionally, that the processing module 1501 is configured to determine a first time domain resource includes: The processing module 1501 is configured to determine the first time domain resource based on indication information from a first network device, where the indication information indicates a location of the first time domain resource.

When the communication apparatus 150 is configured to implement the function of the first network device or the receiving device:

Optionally, $T_2$, $N_1$, and $T_1$ satisfy the following formula: $T_2 = (N_1+1) \times T_1$.

Optionally, a 1st second time domain symbol in the $N_2$ second time domain symbols is a $T_1$th time domain symbol after a last first time domain symbol in the $N_1$ first time domain symbols. Optionally, the first time domain resource is in a first time period, and a 1st first time domain symbol in the $N_1$ first time domain symbols is a time domain symbol numbered $N_S$ in the first time period.

Optionally, the first time domain resource is in the first time period, and $N_2$ satisfies the following formula:

$$N_2 \le \left\lfloor \left( N - 1 - N_s - N_1 \times T_1 \right) / T_2 \right\rfloor + 1 \,,$$

where N is a total quantity of time domain symbols occupied by the first time period, $N_s$ is a number of the 1st first time domain symbol in the $N_1$ first time domain symbols in the first time period, and ⌊ ⌋ represents rounding down.

Optionally, $N_1$ is 4, and $T_1$ is 7; $N_1$ is 6, and $T_1$ is 5; or $N_1$ is 34, and $T_1$ is 1.

Optionally, the first time domain resource is in the first time period, and a slot configuration in the first time period is DDDSU; and $7 \le N_S \le 23$, $5 \le N_S \le 21$, or $1 \le N_S \le 17$, where D represents a downlink slot, S represents a slot including an uplink time domain symbol and a downlink time domain symbol, and U represents an uplink slot.

Optionally, the first time domain resource is in the first time period, and a slot configuration in the first time period is DDDSUDDSUU or DDSUU; and $7 \le N_S \le 9$, $5 \le N_S \le 7$, or $1 \le N_S \le 3$.

Optionally, the first time domain resource is in the first time period; and the first time period occupies 40 slots, $N_2$ is 15, and $T_2$ is 35; or the first time period occupies 80 slots, $N_2$ is 31, and $T_2$ is 35.

Optionally, a location of a 1st first time domain symbol in the $N_1$ first time domain symbols is the same as a location of a 1st second time domain symbol in the $N_2$ second time domain symbols. Optionally, $T_1$ and $T_2$ satisfy the following formulas:

$$T_1 = M \times a_1, T_2 = M \times a_2 \,,$$

where $a_1 < a_2$, $a_1$ and $a_2$ are relatively prime, and $M$ is a positive integer.

Optionally, the first time domain resource is in the first time period, and the first time period occupies 80 slots; $N_1$ is 15, $T_1$ is 36, $N_2$ is 8, $T_2$ is 135, and $35 \le N_S \le 37$; or $N_1$ is 13, $T_1$ is 36, $N_2$ is 8, $T_2$ is 117, and $0 \le N_S \le 2$.

Optionally, the first signal is used for sensing.

Optionally, a difference between a 1st time domain symbol in the first time domain resource and a 1st time domain symbol in the second time domain resource is $T_3$ time domain symbols, where $T_3$ is a positive integer.

All related content of the steps in the foregoing method embodiment may be cited in function descriptions of the corresponding functional modules. Details are not described herein again.

In this application, the communication apparatus 150 is presented in a form of functional modules obtained through division in an integrated manner. The "module" herein may be an application-specific integrated circuit (application-specific integrated circuit, ASIC), a circuit, a processor and a memory that execute one or more software or firmware programs, an integrated logic circuit, and/or another component that can provide the foregoing functions.

In some embodiments, when the communication apparatus 150 in FIG. 15 is a chip or a chip system, a function/an implementation process of the transceiver module 1502 may be implemented through an input/output interface (or a communication interface) of the chip or the chip system, and a function/an implementation process of the processing module 1501 may be implemented by using a processor (or a processing circuit) of the chip or the chip system.

Because the communication apparatus 150 provided in this embodiment may perform the foregoing methods, for technical effects that can be achieved by the communication apparatus 150, refer to the foregoing method embodiment. Details are not described herein again.

In a possible product form, the first network device or the receiving device in embodiments of this application may be further implemented through the following: one or more field programmable gate arrays (field programmable gate arrays, FPGAs), programmable logic devices (programmable logic devices, PLDs), controllers, state machines, gate logic, discrete hardware components, any other suitable circuits, or any combination of circuits capable of performing various functions described throughout this application.

In another possible product form, the first network device or the receiving device in embodiments of this application may be implemented in a general bus architecture. For ease of description, refer to FIG. 16. FIG. 16 is a diagram of a structure of a communication apparatus 1600 according to an embodiment of this application. The communication apparatus 1600 includes a processor 1601 and a transceiver 1602. The communication apparatus 1600 may be a receiving device, or a chip or a chip system in the receiving device; or the communication apparatus 1600 may be a first network device, or a chip or a module in the first network device. FIG. 16 shows only main components of the communication apparatus 1600. In addition to the processor 1601 and the transceiver 1602, the communication apparatus may further include a memory 1603 and an input/output apparatus (not shown in the figure).

Optionally, the processor 1601 is mainly configured to: process a communication protocol and communication data, control the entire communication apparatus, execute a software program, and process data of the software program. The memory 1603 is mainly configured to store the software program and data. The transceiver 1602 may include a radio frequency circuit and an antenna. The radio frequency circuit is mainly configured to perform conversion between a baseband signal and a radio frequency signal, and process a radio frequency signal. The antenna is mainly configured to receive and send a radio frequency signal in a form of an electromagnetic wave. The input/output apparatus, such as a touchscreen, a display, or a keyboard, is mainly configured to: receive data input by a user and output data to the user.

The processor 1601, the transceiver 1602, and the memory 1603 may be connected through a communication bus.

After the communication apparatus is powered on, the processor 1601 may read the software program from the memory 1603, interpret and execute instructions of the software program, and process data of the software program. When data needs to be sent wirelessly, the processor 1601 performs baseband processing on the to-be-sent data, and then outputs the baseband signal to the radio frequency circuit. The radio frequency circuit performs radio frequency processing on the baseband signal, and then sends, via the antenna, the radio frequency signal in the form of the electromagnetic wave. When data is sent to the communication apparatus, the radio frequency circuit receives the radio frequency signal via the antenna, converts the radio frequency signal into the baseband signal, and outputs the baseband signal to the processor 1601. The processor 1601 converts the baseband signal into data for processing.

In another implementation, the radio frequency circuit and the antenna may be disposed independent of the processor that performs baseband processing. For example, in a distributed scenario, the radio frequency circuit and the antenna may be remotely disposed independent of the communication apparatus.

Optionally, when the communication apparatus is a network device, as shown in FIG. 17, the network device may include a central unit (central unit, CU) and a distributed unit (distributed unit, DU). A plurality of DUs may be controlled by one CU in a centralized manner. The CU and the DU may be divided based on protocol layer functions of wireless networks thereof. For example, functions of a packet data convergence protocol (packet data convergence protocol, PDCP) layer and a protocol layer above the PDCP layer are set in the CU, and functions of protocol layers below the PDCP layer, for example, a radio link control (radio link control, RLC) layer and a media access control (media access control, MAC) layer, are set in the DU. It should be noted that division into the protocol layers is merely an example, and there may be another division of protocol layers. The radio frequency apparatus may not be disposed in the DU but is disposed remotely from the DU, may be integrated into the DU, or a part of the radio frequency apparatus is disposed remotely from the DU and a remaining part is integrated into the DU. This is not limited in this application.

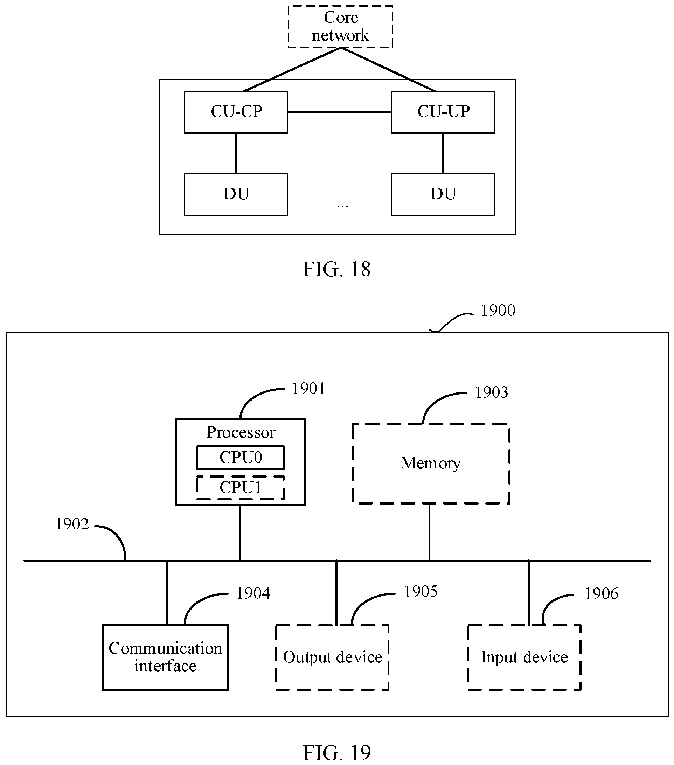

Further, as shown in FIG. 18, a CU control plane (CU control plane, CU-CP) and a CU user plane (CU user plane, CU-UP) may be separated into different entities for implementation, where the entities are respectively a CU control plane entity (CU-CP entity) and a CU user plane entity (CU-UP entity).

Optionally, in the structure of the network device shown in FIG. 17 or FIG. 18, signaling generated by the CU may be sent to the UE by using the DU, or signaling generated by the UE may be sent to the CU by using the DU. The DU may directly transparently transmit the signaling to the UE or the CU through protocol layer encapsulation without parsing the signaling.

In still another possible product form, the network device or the terminal device in this application may use a composition structure shown in FIG. 19, or include components shown in FIG. 19. FIG. 19 is a diagram of composition of a communication apparatus 1900 according to this application. The communication apparatus 1900 may be a terminal device, or a chip or a system-on-a-chip in the terminal device, or may be a network device, or a module, a chip, or a system-on-a-chip in the network device.

As shown in FIG. 19, the communication apparatus 1900 includes at least one processor 1901 and at least one communication interface (FIG. 19 is merely described by using an example in which one communication interface 1904 and one processor 1901 are included). Optionally, the communication apparatus 1900 may further include a communication bus 1902 and a memory 1903.

The processor 1901 may be a general-purpose central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. The processor 1901 may alternatively be another apparatus having a processing function, for example, a circuit, a component, or a software module. This is not limited.

The communication bus 1902 is configured to connect different components in the communication apparatus 1900, so that the different components can communicate with each other. The communication bus 1902 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, the bus is represented by using only one bold line in FIG. 19. However, this does not indicate that there is only one bus or only one type of bus. The communication interface 1904 is configured to communicate with another device or another communication network. For example, the communication interface 1904 may be a module, a circuit, a transceiver, or any apparatus that can implement communication. Alternatively, the communication interface 1904 may be an input/output interface located in the processor 1901, and is configured to implement signal input and signal output of the processor.

The memory 1903 may be an apparatus having a storage function, and is configured to store instructions and/or data. The instructions may be a computer program.

For example, the memory 1903 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, optical disc storage (including a compressed optical disc, a laser disc, an optical disc, a digital universal optical disc, a Blu-ray optical disc, and the like), a magnetic disk storage medium or another magnetic storage device, or the like. This is not limited.

It should be noted that the memory 1903 may be independent of the processor 1901, or may be integrated with the processor 1901. The memory 1903 may be located inside the communication apparatus 1900, or may be located outside the communication apparatus 1900. This is not limited. The processor 1901 may be configured to execute the instructions stored in the memory 1903, to perform a method provided in the following embodiment of this application.

In an optional implementation, the communication apparatus 1900 may further include an output device 1905 and an input device 1906. The output device 1905 communicates with the processor 1901, and may display information in a plurality of manners. For example, the output device 1905 may be a liquid crystal display (liquid crystal display, LCD), a light emitting diode (light emitting diode, LED) display device, a cathode ray tube (cathode ray tube, CRT) display device, a projector (projector), or the like. The input device 1906 communicates with the processor 1901, and may receive an input of a user in a plurality of manners. For example, the input device 1906 may be a mouse, a keyboard, a touchscreen device, or a sensing device.

In some embodiments, in hardware implementation, a person skilled in the art may figure out that the communication apparatus 150 may be in a form of the communication apparatus 1900 shown in FIG. 19.

In an example, functions/implementation processes of the processing module 1501 in FIG. 15 may be implemented by the processor 1901 in the communication apparatus 1900 shown in FIG. 19 by invoking the computer-executable instructions stored in the memory 1903. Functions/implementation processes of the transceiver module 1502 in FIG. 15 may be implemented by the communication interface 1904 in the communication apparatus 1900 shown in FIG. 19.

It should be noted that the structure shown in FIG. 19 does not constitute a specific limitation on the network device or the terminal device. For example, in some other embodiments of this application, the network device or the terminal device may include more or fewer components than those shown in the figure, some components may be combined, some components may be split, or the components may be differently arranged. The components shown in the figure may be implemented by hardware, software, or a combination of software and hardware.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any one of the foregoing method embodiments. Certainly, the communication apparatus may not include a memory.

In another possible implementation, the communication apparatus further includes an interface circuit. The interface circuit is a code/data read/write interface circuit, and the interface circuit is configured to receive computer-executable instructions (where the computer-executable instructions are stored in a memory, and may be directly read from the memory, or may be read via another component) and transmit the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores a computer program or instructions. When the computer program or instructions are executed by a computer, functions in any one of the foregoing method embodiments are implemented.

This application further provides a computer program product. When the computer program product is executed by a computer, functions in any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiment. Details are not described herein again.

It may be understood that the system, apparatuses, and methods described in this application may alternatively be implemented in another manner. For example, the described apparatus embodiments are merely examples. For example, division into the units is merely logical function division. In an actual implementation, there may be another division manner. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may be physically separated or not, this is, may be located together in the same place or distributed on a plurality of network units. A component displayed as a unit may or may not be a physical unit. A part or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

All or a part of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. **In** the claims, "comprising" (comprising) does not exclude another component or another step, and "a" or "one" does not exclude a case of a plurality. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and the accompanying drawings are merely example descriptions of this application defined by the accompanying claims, and are considered as any of or all modifications, variations, combinations or equivalents that cover the scope of this application. It is clear that a person skilled in the art can make various modifications and variations to this application without departing from the spirit and scope of this application. In this way, this application is intended to cover these modifications and variations of this application provided that they fall within the scope of the claims of this application and their equivalent technologies.

**Claims**

1. A communication method, wherein the method comprises:

   determining a first time domain resource, wherein the first time domain resource comprises $N_1$ first time domain symbols and $N_2$ second time domain symbols, a difference between any two adjacent first time domain symbols in the $N_1$ first time domain symbols is $T_1$ time domain symbols, and a difference between any two adjacent second time domain symbols in the $N_2$ second time domain symbols is $T_2$ time domain symbols, wherein $T_2 > T_1$, and $N_1$ and $N_2$ are positive integers; and
   sending a first signal on the first time domain resource.

2. The method according to claim 1, wherein $T_2$, $N_1$, and $T_1$ satisfy the following formula:

$$T_2 = (N_1 + 1) \times T_1.$$

3. The method according to claim 1 or 2, wherein a 1st second time domain symbol in the $N_2$ second time

domain symbols is a $T_1{}^{th}$ time domain symbol after a last first time domain symbol in the $N_1$ first time domain symbols.

4. The method according to any one of claims 1 to 3, wherein the first time domain resource is in a first time period, and a 1st first time domain symbol in the $N_1$ first time domain symbols is a time domain symbol numbered $N_S$ in the first time period.

5. The method according to any one of claims 1 to 4, wherein the first time domain resource is in the first time period, and $N_2$ satisfies the following formula:

$$N_2 \leq \left\lfloor \left( N - 1 - N_s - N_1 \times T_1 \right) / T_2 \right\rfloor + 1,$$

wherein $N$ is a total quantity of time domain symbols occupied by the first time period, $N_s$ is a number of the 1st first time domain symbol in the $N_1$ first time domain symbols in the first time period, and $\lfloor \ \rfloor$ represents rounding down.

6. The method according to any one of claims 1 to 5, wherein

   $N_1$ is 4, and $T_1$ is 7;
   $N_1$ is 6, and $T_1$ is 5; or
   $N_1$ is 34, and $T_1$ is 1.

7. The method according to claim 6, wherein the first time domain resource is in the first time period, and a slot configuration in the first time period is DDDSU; and

$$7 \leq N_S \leq 23, \quad 5 \leq N_S \leq 21, \text{ or } \quad 1 \leq N_S \leq 17,$$

wherein D represents a downlink slot, S represents a slot comprising an uplink time domain symbol and a downlink time domain symbol, U represents an uplink slot, $N_s$ is the number of the 1st first time domain symbol in the $N_1$ first time domain symbols in the first time period, and $N_s$ is a positive integer.

8. The method according to claim 6, wherein the first time domain resource is in the first time period, and a slot configuration in the first time period is DDDSUDDSUU or DDSUU; and

$$7 \leq N_S \leq 9, \quad 5 \leq N_S \leq 7, \text{ or } \quad 1 \leq N_S \leq 3,$$

wherein D represents a downlink slot, S represents a slot comprising an uplink time domain symbol and a downlink time domain symbol, U represents an uplink slot, $N_s$ is the number of the 1st first time domain symbol in the $N_1$ first time domain symbols in the first

time period, and $N_s$ is a positive integer.

9. The method according to any one of claims 6 to 8, wherein the first time domain resource is in the first time period; and

the first time period occupies 40 slots, $N_2$ is 15, and $T_2$ is 35; or
the first time period occupies 80 slots, $N_2$ is 31, and $T_2$ is 35.

10. The method according to claim 1, wherein a location of a $1^{st}$ first time domain symbol in the $N_1$ first time domain symbols is the same as a location of a $1^{st}$ second time domain symbol in the $N_2$ second time domain symbols.

11. The method according to claim 1 or 10, wherein $T_1$ and $T_2$ satisfy the following formulas:

$$T_1 = M \times a_1, T_2 = M \times a_2,$$

wherein $a_1 < a_2$, $a_1$ and $a_2$ are relatively prime, and $M$ is a positive integer.

12. The method according to claim 1, 10, or 11, wherein the first time domain resource is in a first time period, and the first time period occupies 80 slots; and

$N_1$ is 15, $T_1$ is 36, $N_2$ is 8, $T_2$ is 135, and $35 \leq N_S \leq 37$ ; or
$N_1$ is 13, $T_1$ is 36, $N_2$ is 8, $T_2$ is 117, and $0 \leq N_S \leq 2$, wherein $N_s$ is a number of the $1^{st}$ first time domain symbol in the $N_1$ first time domain symbols in the first time period, and $N_s$ is a positive integer.

13. The method according to any one of claims 1 to 12, wherein the method further comprises:
receiving a second signal on the first time domain resource, wherein the second signal is an echo signal of the first signal.

14. The method according to any one of claims 1 to 13, wherein the first signal is used for sensing.

15. The method according to any one of claims 1 to 14, wherein the method further comprises: sending indication information, wherein the indication information indicates a location of the first time domain resource.

16. The method according to any one of claims 1 to 15, wherein the method further comprises:

determining a second time domain resource, wherein the second time domain resource com-

prises $N_1$ third time domain symbols and $N_2$ fourth time domain symbols, a difference between any two adjacent third time domain symbols in the $N_1$ third time domain symbols is $T_1$ time domain symbols, and a difference between any two adjacent fourth time domain symbols in the $N_2$ fourth time domain symbols is $T_2$ time domain symbols; and
the sending a first signal on the first time domain resource comprises:
sending the first signal on the first time domain resource and the second time domain resource.

17. The method according to claim 16, wherein a difference between a $1^{st}$ time domain symbol in the first time domain resource and a $1^{st}$ time domain symbol in the second time domain resource is $T_3$ time domain symbols, wherein $T_3$ is a positive integer.

18. A communication method, wherein the method comprises:

determining a first time domain resource, wherein the first time domain resource comprises $N_1$ first time domain symbols and $N_2$ second time domain symbols, a difference between any two adjacent first time domain symbols in the $N_1$ first time domain symbols is $T_1$ time domain symbols, and a difference between any two adjacent second time domain symbols in the $N_2$ second time domain symbols is $T_2$ time domain symbols, wherein $T_2 > T_1$, and $N_1$ and $N_2$ are positive integers; and
receiving a first signal on the first time domain resource.

19. The method according to claim 18, wherein $T_2$, $N_1$, and $T_1$ satisfy the following formula:

$$T_2 = (N_1 + 1) \times T_1.$$

20. The method according to claim 18 or 19, wherein a $1^{st}$ second time domain symbol in the $N_2$ second time domain symbols is a $T_1^{th}$ time domain symbol after a last first time domain symbol in the $N_1$ first time domain symbols.

21. The method according to any one of claims 18 to 20, wherein the first time domain resource is in a first time period, and $N_2$ satisfies the following formula:

$$N_2 \leq \left\lfloor (N - 1 - N_s - N_1 \times T_1)/T_2 \right\rfloor + 1,$$

wherein $N$ is a total quantity of time domain symbols occupied by the first time period, $N_s$ is a number of a $1^{st}$ first time domain symbol in the $N_1$ first time

domain symbols in the first time period, and L J represents rounding down.

22. The method according to claim 18, wherein a location of a 1st first time domain symbol in the $N_1$ first time domain symbols is the same as a location of a 1st second time domain symbol in the $N_2$ second time domain symbols.

23. The method according to claim 18 or 22, wherein $T_1$ and $T_2$ satisfy the following formulas:

$$T_1 = M \times a_1, T_2 = M \times a_2,$$

wherein $a_1 < a_2$, $a_1$ and $a_2$ are relatively prime, and $M$ is a positive integer.

24. A communication apparatus, wherein the communication apparatus comprises a processing module and a transceiver module, wherein

the processing module is configured to determine a first time domain resource, wherein the first time domain resource comprises $N_1$ first time domain symbols and $N_2$ second time domain symbols, a difference between any two adjacent first time domain symbols in the $N_1$ first time domain symbols is $T_1$ time domain symbols, and a difference between any two adjacent second time domain symbols in the $N_2$ second time domain symbols is $T_2$ time domain symbols, wherein $T_2 > T_1$, and $N_1$ and $N_2$ are positive integers; and
the transceiver module is configured to send a first signal on the first time domain resource.

25. The communication apparatus according to claim 24, wherein $T_2$, $N_1$, and $T_1$ satisfy the following formula:

$$T_2 = (N_1 + 1) \times T_1.$$

26. The communication apparatus according to claim 24 or 25, wherein a 1st second time domain symbol in the $N_2$ second time domain symbols is a $T_1$th time domain symbol after a last first time domain symbol in the $N_1$ first time domain symbols.

27. The communication apparatus according to any one of claims 24 to 26, wherein the first time domain resource is in a first time period, and a 1st first time domain symbol in the $N_1$ first time domain symbols is a time domain symbol numbered $N_S$ in the first time period.

28. The communication apparatus according to any one of claims 24 to 27, wherein the first time domain resource is in the first time period, and $N_2$ satisfies the following formula:

$$N_2 \leq \left\lfloor \left( N - 1 - N_s - N_1 \times T_1 \right) / T_2 \right\rfloor + 1,$$

wherein $N$ is a total quantity of time domain symbols occupied by the first time period, $N_s$ is a number of the 1st first time domain symbol in the $N_1$ first time domain symbols in the first time period, and L J represents rounding down.

29. The communication apparatus according to any one of claims 24 to 28, wherein

$N_1$ is 4, and $T_1$ is 7;
$N_1$ is 6, and $T_1$ is 5; or
$N_1$ is 34, and $T_1$ is 1.

30. The communication apparatus according to claim 29, wherein the first time domain resource is in the first time period, and a slot configuration in the first time period is DDDSU; and

$$7 \leq N_S \leq 23, \quad 5 \leq N_S \leq 21, \text{ or } 1 \leq N_S \leq 17,$$

wherein D represents a downlink slot, S represents a slot comprising an uplink time domain symbol and a downlink time domain symbol, U represents an uplink slot, $N_s$ is the number of the 1st first time domain symbol in the $N_1$ first time domain symbols in the first time period, and $N_s$ is a positive integer.

31. The communication apparatus according to claim 29, wherein the first time domain resource is in the first time period, and a slot configuration in the first time period is DDDSUDDSUU or DDSUU; and

$$7 \leq N_S \leq 9, \quad 5 \leq N_S \leq 7, \text{ or } 1 \leq N_S \leq 3,$$

wherein D represents a downlink slot, S represents a slot comprising an uplink time domain symbol and a downlink time domain symbol, U represents an uplink slot, $N_s$ is the number of the 1st first time domain symbol in the $N_1$ first time domain symbols in the first time period, and $N_s$ is a positive integer.

32. The communication apparatus according to any one of claims 29 to 31, wherein the first time domain resource is in the first time period; and

the first time period occupies 40 slots, $N_2$ is 15, and $T_2$ is 35; or
the first time period occupies 80 slots, $N_2$ is 31, and $T_2$ is 35.

**33.** The communication apparatus according to claim 24, wherein a location of a 1st first time domain symbol in the $N_1$ first time domain symbols is the same as a location of a 1st second time domain symbol in the $N_2$ second time domain symbols.

**34.** The communication apparatus according to claim 24 or 33, wherein $T_1$ and $T_2$ satisfy the following formulas:

$$T_1 = M \times a_1, T_2 = M \times a_2,$$

wherein $a_1 < a_2$, $a_1$ and $a_2$ are relatively prime, and $M$ is a positive integer.

**35.** The communication apparatus according to claim 24, 33, or 34, wherein the first time domain resource is in a first time period, and the first time period occupies 80 slots; and

   $N_1$ is 15, $T_1$ is 36, $N_2$ is 8, $T_2$ is 135, and $35 \le N_S \le 37$ ; or
   $N_1$ is 13, $T_1$ is 36, $N_2$ is 8, $T_2$ is 117, and $0 \le N_S \le 2$, wherein $N_s$ is a number of the 1st first time domain symbol in the $N_1$ first time domain symbols in the first time period, and $N_s$ is a positive integer.

**36.** The communication apparatus according to any one of claims 24 to 35, wherein
   the transceiver module is further configured to receive a second signal on the first time domain resource, wherein the second signal is an echo signal of the first signal.

**37.** The communication apparatus according to any one of claims 24 to 36, wherein the first signal is used for sensing.

**38.** The communication apparatus according to any one of claims 24 to 37, wherein the transceiver module is further configured to send indication information, wherein the indication information indicates a location of the first time domain resource.

**39.** The communication apparatus according to any one of claims 24 to 38, wherein

   the processing module is further configured to determine a second time domain resource, wherein the second time domain resource comprises $N_1$ third time domain symbols and $N_2$ fourth time domain symbols, a difference between any two adjacent third time domain symbols in the $N_1$ third time domain symbols is $T_1$ time domain symbols, and a difference between any two adjacent fourth time domain symbols in

the $N_2$ fourth time domain symbols is $T_2$ time domain symbols; and
   that the transceiver module is configured to send a first signal on the first time domain resource comprises:
   the transceiver module is configured to send the first signal on the first time domain resource and the second time domain resource.

**40.** The communication apparatus according to claim 39, wherein a difference between a 1st time domain symbol in the first time domain resource and a 1st time domain symbol in the second time domain resource is $T_3$ time domain symbols, wherein $T_3$ is a positive integer.

**41.** A communication apparatus, wherein the communication apparatus comprises a processing module and a transceiver module, wherein

   the processing module is configured to determine a first time domain resource, wherein the first time domain resource comprises $N_1$ first time domain symbols and $N_2$ second time domain symbols, a difference between any two adjacent first time domain symbols in the $N_1$ first time domain symbols is $T_1$ time domain symbols, and a difference between any two adjacent second time domain symbols in the $N_2$ second time domain symbols is $T_2$ time domain symbols, wherein $T_2 > T_1$, and $N_1$ and $N_2$ are positive integers; and
   the transceiver module is configured to receive a first signal on the first time domain resource.

**42.** The communication apparatus according to claim 41, wherein $T_2$, $N_1$, and $T_1$ satisfy the following formula:

$$T_2 = (N_1 + 1) \times T_1.$$

**43.** The communication apparatus according to claim 41 or 42, wherein a 1st second time domain symbol in the $N_2$ second time domain symbols is a $T_1$th time domain symbol after a last first time domain symbol in the $N_1$ first time domain symbols.

**44.** The communication apparatus according to any one of claims 41 to 43, wherein the first time domain resource is in a first time period, and $N_2$ satisfies the following formula:

$$N_2 \le \lfloor (N - 1 - N_s - N_1 \times T_1) / T_2 \rfloor + 1 ,$$

wherein $N$ is a total quantity of time domain symbols occupied by the first time period, $N_s$ is a number of a

1st first time domain symbol in the $N_1$ first time domain symbols in the first time period, and L J represents rounding down.

45. The communication apparatus according to claim 41, wherein a location of a 1st first time domain symbol in the $N_1$ first time domain symbols is the same as a location of a 1st second time domain symbol in the $N_2$ second time domain symbols.

46. The communication apparatus according to claim 41 or 45, wherein $T_1$ and $T_2$ satisfy the following formulas:

$$T_1 = M \times a_1, T_2 = M \times a_2,$$

wherein $a_1 < a_2$, $a_1$ and $a_2$ are relatively prime, and $M$ is a positive integer.

47. A communication apparatus, wherein the communication apparatus comprises a processor, and the processor is configured to run a computer program or instructions, to enable the communication apparatus to perform the method according to any one of claims 1 to 17.

48. A communication apparatus, wherein the communication apparatus comprises a processor, and the processor is configured to run a computer program or instructions, to enable the communication apparatus to perform the method according to any one of claims 18 to 23.

49. A computer-readable storage medium, wherein the computer-readable storage medium stores computer instructions or a program; and when the computer instructions or the program is run on a computer, the method according to any one of claims 1 to 17 is performed.

50. A computer-readable storage medium, wherein the computer-readable storage medium stores computer instructions or a program; and when the computer instructions or the program is run on a computer, the method according to any one of claims 18 to 23 is performed.

51. A computer program product, wherein the computer program product comprises computer instructions; and when a part or all of the computer instructions are run on a computer, the method according to any one of claims 1 to 17 is performed.

52. A computer program product, wherein the computer program product comprises computer instructions; and when a part or all of the computer instructions are run on a computer, the method according to any one of claims 18 to 23 is performed.

53. A communication system, wherein the communication system comprises the communication apparatus according to claim 24 and the communication apparatus according to claim 25.

First network
device

Sensing
signal

Echo
signal

FIG. 1

First network
device

Sensing
signal

Echo
signal

Communication
device

FIG. 2

First network
device

Second network
device

Sensing
signal

Echo
signal

First network
device

Second network
device

Sensing
signal

Echo
signal

Communication
device

FIG. 3

First network
device

Sensing
signal

Terminal device

Echo signal

First network
device

Communication
device

Sensing
signal

Terminal device

Echo signal

FIG. 4

Radio frame

Slot

0 1 2 3 4 5 6 7 8 9 10 11 12 13

Downlink
signal

Uplink
signal

Sensing
signal

FIG. 5

S601 | A first network device determines a first time domain resource, including $N_1$ first time domain symbols and $N_2$ second time domain symbols, where a difference between any two adjacent first time domain symbols is $T_1$ time domain symbols, and a difference between any two adjacent second time domain symbols is $T_2$ time domain symbols

S602 | The first network device sends a first signal on the first time domain resource

FIG. 6

First time period

$N_1$ first time domain symbols

$N_2$ second time domain symbols

1$^{st}$ first time domain symbol numbered $Ns$

First time domain resource

First time domain symbol

Second time domain symbol

FIG. 7

| S601 | A first network device determines a first time domain resource, including $N_1$ first time domain symbols and $N_2$ second time domain symbols, where a difference between any two adjacent first time domain symbols is $T_1$ time domain symbols, and a difference between any two adjacent second time domain symbols is $T_2$ time domain symbols |
|---|---|
| S602 | The first network device sends a first signal on the first time domain resource |
| S603 | The first network device receives a second signal, where the second signal is an echo signal of the first signal |

FIG. 8

| First network device | Sensing target | Second network device/Terminal device |
|---|---|---|

S601: Determine a first time domain resource, including $N_1$ first time domain symbols and $N_2$ second time domain symbols

S901: Determine the first time domain resource, including the $N_1$ first time domain symbols and the $N_2$ second time domain symbols

S602: Send a first signal on the first time domain resource

Reflection

S902: Receive the first signal on the first time domain resource

FIG. 9

First time domain symbol

Second time domain symbol

$N_1$=Four first time domain symbols

$T_2$=(4+1)*7=35

$T_1$=7

Time domain symbol in which an echo signal virtualized by a receiver is located

$T_1$=7

FIG. 10

FIG. 11

EP 4 529 323 A1

A location of a 1$^{st}$ first time domain
symbol is the same as a location of
a 1$^{st}$ second time domain symbol

$T_1$

$T_2$

$T_2$

First time domain
symbol and second
time domain symbol

First time
domain symbol

Second time
domain symbol

FIG. 12

FIG. 13

FIG. 14

EP 4 529 323 A1

Communication apparatus 150

Processing module 1501

Transceiver module 1502

FIG. 15

Communication apparatus 1600

Processor 1601

Instructions

Memory 1603

Instructions

Transceiver 1602

Radio frequency circuit

Antenna

FIG. 16

Core network

CU

DU ... DU

FIG. 17

FIG. 18

FIG. 19

## INTERNATIONAL SEARCH REPORT

| International application No. |
|---|
| **PCT/CN2023/093333** |

**A.    CLASSIFICATION OF SUBJECT MATTER**

H04W72/0446(2023.01)i;  G01S13/00(2006.01)i

According to International Patent Classification (IPC) or to both national classification and IPC

**B.    FIELDS SEARCHED**

Minimum documentation searched (classification system followed by classification symbols)

IPC:H04W, G01S

Documentation searched other than minimum documentation to the extent that such documents are included in the fields searched

Electronic data base consulted during the international search (name of data base and, where practicable, search terms used)

3GPP, CNABS, CNTXT, DWPI, ENTXTC, EPTXT, JPTXT, KRTXT, USTXT, VEN, WOTXT: FDMA符号, OFDM符号, 差, 反射, 符号, 感测, 感知, 回波, 间隔, 两个, 上行符号, 时域, 时域符号, 通信, 通信感知一体化, 下行符号, 相差, 相邻, communication, DFRC, domain, echo, huawei, ICAS, ISAC, pattern, slot, symbol, time, signal, reflect+, sens+

**C.    DOCUMENTS CONSIDERED TO BE RELEVANT**

| Category* | Citation of document, with indication, where appropriate, of the relevant passages | Relevant to claim No. |
|---|---|---|
| A | WO 2021237393 A1 (QUALCOMM INC.) 02 December 2021 (2021-12-02) description, paragraphs 40-143, and figures 1-16 | 1-53 |
| A | CN 114402222 A (HUAWEI TECHNOLOGIES CO., LTD.) 26 April 2022 (2022-04-26) entire document | 1-53 |
| A | CN 113784443 A (CHINA ACADEMY OF INFORMATION AND COMMUNICATIONS TECHNOLOGY) 10 December 2021 (2021-12-10) entire document | 1-53 |
| A | CN 114325679 A (SOUTH UNIVERSITY OF SCIENCE AND TECHNOLOGY OF CHINA et al.) 12 April 2022 (2022-04-12) entire document | 1-53 |
| A | CHINA TELECOM. "New SID on Integrating Sensing with Communication in NR" *3GPP TSG RAN Meeting #96 RP-221292*, 09 June 2022 (2022-06-09), entire document | 1-53 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 July 2023** | **19 July 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| WO | 2021237393 | A1 | 02 December 2021 | None | | | |
| CN | 114402222 | A | 26 April 2022 | WO | 2021047279 | A1 | 18 March 2021 |
| | | | | EP | 4022351 | A1 | 06 July 2022 |
| | | | | US | 2021076367 | A1 | 11 March 2021 |
| CN | 113784443 | A | 10 December 2021 | None | | | |
| CN | 114325679 | A | 12 April 2022 | None | | | |

Form PCT/ISA/210 (patent family annex) (July 2022)

**EP 4 529 323 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210661689